# EUROPEAN PATENT APPLICATION

(11) **EP 0 818 906 A2**
(43) Date of publication of application: **14.01.1998**
(21) Application number: 97111660.3
(22) Date of filing: 09.07.1997
(51) Int. Cl.: H04L 29/06

(54) **Information transfer unit and method**

(30) Priority: 11.07.1996 JP 181956/96
(71) Applicant: MATSUSHITA ELECTRIC INDUSTRIAL CO., LTD., Kadoma-shi, Osaka 571 (JP)
(72) Inventor: Matsumoto, Shigeru, Higashiosaka-shi, Osaka 579 (JP)
(74) Representative: Grünecker, Kinkeldey, Stockmair & Schwanhäusser Anwaltssozietät

(57) **Abstract**

A line load measuring element measures a line load of a computer network and stores the results of the measurement in a line load data base. When an information retrieval client demands information retrieval, a line load calculating element extracts line load data at a past time closest to the time of the demand from the line load data base, and calculates a transferable information content in accordance with the extracted load data. When transfer scheduled information has a larger information content than the transferable information content, a transfer information generating element generates transfer information by decreasing the information content of the transfer scheduled information in accordance with the line load, and when the transfer scheduled information has a smaller information content than the transferable information content, the transfer information generating element generates transfer information by increasing the information content of the transfer scheduled information in accordance with the line load.

## Description

### BACKGROUND OF THE INVENTION

The present invention relates to information transfer unit and method for transferring information between computers mutually connected through a communications medium.

A conventional information transfer unit will be described with reference to the accompanying drawing.

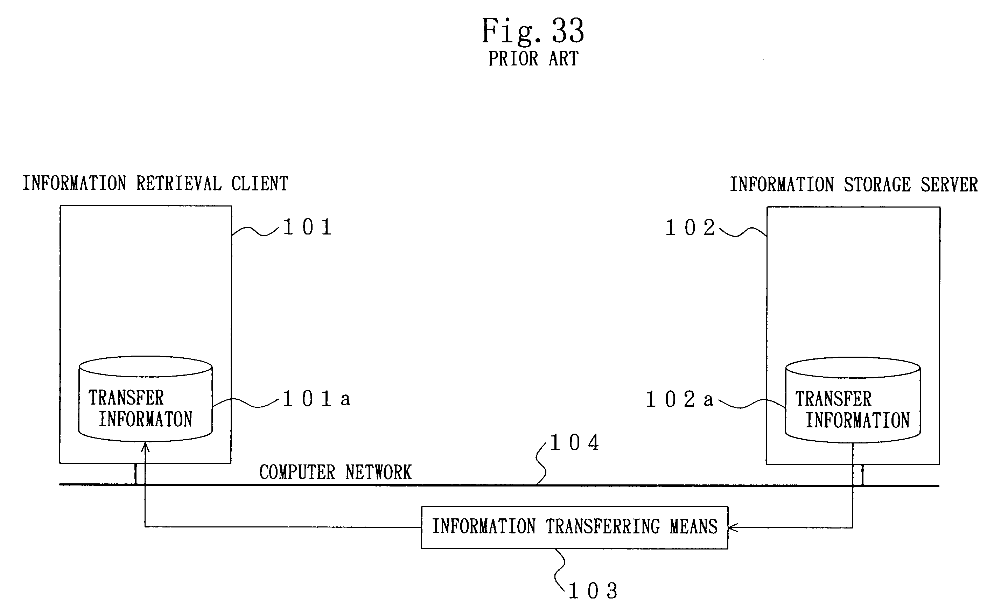

Figure 33 is a diagram for showing the system configuration of the conventional information transfer unit. In the conventional information transfer unit, as is shown in Figure 33, when an information retrieval client 101, that is, a client computer for demanding information, demands information retrieval of an information storage server 102, that is, a server computer for storing information and providing the information retrieval client 101 with the stored information, the information storage server 102 extracts information to be transferred from a data base 102a in accordance with an instruction of information transferring means 103, so that the extracted information can be transferred to the information retrieval client 101 through a computer network 104.

In the conventional information transfer unit having the aforementioned system configuration, information is transferred without considering the loads of the computer network 104, the information retrieval client 101 and the information storage server 102.

However, since no consideration is thus given to the loads of the computer network 104, the information retrieval client 101 and the information storage server 102 in transferring information by the conventional information transfer unit, when the loads are large, and in particular, when information having a very large information content such as image data is to be transferred, the information cannot be transferred, or the transfer of the information requires a very long period of time.

### SUMMARY OF THE INVENTION

In view of the aforementioned conventional problem, the object of the present invention is realizing information transfer in which information can be transferred in a short period of time when a load is large and information with improved quality can be transferred when a load is small.

The first information transfer unit of this invention transfers information between a plurality of computers mutually connected through a communications medium, and comprises information transferring means for increasing/decreasing an information content of transfer information in accordance with a size of a load.

Since the first information transfer unit comprises the information transferring means for increasing/decreasing the information content of the transfer information in accordance with the size of the load, the information content of the transfer information can be decreased when the load is large, so as to shorten time required for the transfer. Thus, minimum essential information can be obtained without a waiting time. Furthermore, since additional information in accordance with the load can be added to the transfer information when the load is small, information for improving the quality of the transfer information can be added.

The second information transfer unit of this invention, used in a computer network including a server computer for storing and providing information and a client computer for demanding the information mutually connected through a communications medium, comprises line load measuring means for measuring a line load of the communications medium; line load calculating means for calculating a size of the line load; transfer information generating means for generating transfer information by decreasing, in accordance with the line load, an information content of transfer scheduled information that is scheduled to be transferred when the calculated size of the line load is larger than a predetermined load, and by increasing, in accordance with the line load, an information content of the transfer scheduled information when the calculated size of the line load is smaller than the predetermined load; and information transferring means for transferring the transfer information generated by the transfer information generating means to the client computer demanding the information.

In the second information transfer unit, the line load of the communications medium is constantly measured, and when the calculated line load is larger than the predetermined load, the information content of the transfer scheduled information is decreased in accordance with the line load, thereby generating the transfer information. When the calculated line load is smaller than the predetermined load, the information content of the transfer scheduled information is increased in accordance with the line load, thereby generating the transfer information. Since the thus generated transfer information is transferred to the client computer, the time required for the transfer can be shortened because the transfer information has a decreased content when the load is large. In this manner, the minimum essential information can be obtained without a waiting time. Furthermore, since additional information in accordance with the load can be added when the load is small, information for improving the quality of the transfer information can be added.

In the second information transfer unit, the line load measuring means preferably measures the line load by using at least one of a number of packets flowing through the communications medium, a length of the packets, a number of collisions and a line activity ratio. Thus, the line load can be definitely measured.

The third information transfer unit of this invention, used in a computer network including a server computer for storing and providing information and a client computer for demanding the information mutually connected through a communications medium, comprises system load measuring means for measuring a system load of the server computer or the client computer; system load calculating means for calculating a size of the system load; transfer information generating means for generating transfer information by decreasing, in accordance with the system load, an information content of transfer scheduled information that is scheduled to be transferred when the calculated size of the system load is larger than a predetermined load, and by increasing, in accordance with the system load, an information content of the transfer scheduled information when the calculated size of the system load is smaller than the predetermined load; and information transferring means for transferring the transfer information generated by the transfer information generating means to the client computer demanding the information.

In the third information transfer unit, the system load of the server or client computer is constantly measured, and when the calculated system load is larger than the predetermined load, the information content of the transfer scheduled information is decreased in accordance with the system load, thereby generating the transfer information. When the calculated system load is smaller than the predetermined load, the information content of the transfer scheduled information is increased in accordance with the system load, thereby generating the transfer information. Since the thus generated transfer information is transferred to the client computer, time required for the transfer can be shortened because the transfer information has a decreased content when the load is large. Thus, the essential information can be obtained without a waiting time. Furthermore, since additional information in accordance with the system load can be added to the transfer information when the load is small, information for improving the quality of the transfer information can be added.

In the third information transfer unit, the system load measuring means preferably measures the system load by using at least one of a CPU activity ratio, disk I/O switching times, page in/out switching times, a number of processes, a hit ratio of a CPU cache, a hit ratio of a disk cache and a data transfer amount of a system bus of the server or client computer. Thus, the system load can be definitely measured.

The fourth information transfer unit of this invention, used in a computer network including a server computer for storing and providing information and a client computer for demanding the information mutually connected through a communications medium, comprises load measuring means for measuring at least one of a line load of the communications medium, a system load of the server computer and a system load of the client computer; information transfer reserving means for receiving an information transfer demand from the client computer and reserving transfer of the information as transfer reserved information; load calculating means for calculating a transferable information content on the basis of the load measured by the load measuring means and instructing to start transfer of the transfer reserved information when the transferable information content is larger than an information content of the transfer reserved information; and information transferring means for transferring the transfer reserved information to the client computer in response to instruction to start the transfer of the transfer reserved information.

In the fourth information transfer unit, at least one of the line load of the communications medium, the system load of the server computer and the system load of the client computer is constantly measured. In response to the information transfer demand by the client computer, the demanded information is reserved as the transfer reserved information, and the transferable information content is calculated on the basis of the measured load. When the transferable information content is larger than the information content of the transfer reserved information, start of the transfer of the transfer reserved information is instructed. Therefore, the demanded information is transferred to the client computer when the load becomes small, the entire demanded information can be transferred to the client computer without fail.

The fifth information transfer unit of this invention, used in a computer network including a server computer for storing and providing information and a client computer for demanding the information mutually connected through a communications medium, comprises differential information generating means in the server computer for generating differential information for adding an information content to information having been transferred to the client computer; load measuring means for measuring at least one of a line load of the communications medium, a system load of the server computer and a system load of the client computer; load calculating means for calculating a transferable information content on the basis of the load measured by the load measuring means, and instructing to start transfer of the differential information when the transferable information content is larger than an information content of the differential information; differential information transferring means for transferring the differential information to the client computer in response to instruction to start the transfer of the differential information; and differential information adding means for adding the differential information to the information having been transferred to the client computer.

In the fifth information transfer unit, at least one of the line load of the communications medium, the system load of the server computer and the system load of the client computer is constantly measured. In the server computer, the differential information for adding the information content to the transfer information already transferred to the client computer is generated, and the transferable information content is calculated on the basis of the measured load. When the transferable information content is larger than the information content of the differential information, start of the transfer of the differential information is instructed. Therefore, the differential information, corresponding to a part of the demanded information not transferred to the client computer, is transferred to the client computer when the load becomes small. As a result, the differential information can be added to the already transferred information, and hence, the already transferred information can attain higher quality.

The sixth information transfer unit of this invention, used in a computer network including a server computer for storing and providing information and a client computer for demanding the information mutually connected through a communications medium, comprises information storing means for storing information having the same content in plural server computers; load measuring means for measuring a line load between the client computer demanding the information and each of the plural server computers or at least a system load of each of the plural server computers; load calculating means for instructing one of the server computers having the smallest load to start transfer of the information; and information transferring means for transferring the information to the client computer in response to instruction to start the transfer of the information.

In the sixth information transfer unit, the information having the same content is stored in the plural server computers, and the line load of the communications medium between the client computer and each of the server computers or at least the system load of each of the server computers is constantly measured. One of the server computers having the smallest load is instructed to start the transfer of the demanded information, and hence, the information is transferred to the client computer from the server computer having the smallest load among the plural server computers. Thus, the demanded information can be transferred to the client computer substantially without a waiting time.

In each of the fourth through sixth information transfer units, the load measuring means preferably measures the line load by using at least one of a number of packets flowing through the communications medium, a length of the packets, a number of collisions and a line activity ratio, and measures the system load by using at least one of a CPU activity ratio, disk I/O switching times, page in/out switching times, swap in/out switching times, a number of processes, a hit ratio of a CPU cache, a hit ratio of a disk cache and a data transfer amount of a system bus of the server or the client computer. Thus, the line load or the system load can be definitely measured.

The first method of transferring information of this invention comprises, in transferring information between plural computers mutually connected through a communications medium, an information transferring step of increasing/decreasing an information content of transfer information in accordance with a size of a load.

Since the first information transfer method comprises the information transferring step of increasing/decreasing the information content of the transfer information in accordance with the size of the load, time required for the transfer can be shortened because the transfer information has a decreased content when the load is large. Therefore, the minimum essential information can be obtained without a waiting time. Furthermore, when the load is small, additional information in accordance with the load can be added to the transfer information, and hence, information for improving the quality of the transfer information can be added.

The second information transfer method of this invention, used in a computer network including a server computer for storing and providing information and a client computer for demanding the information mutually connected through a communications medium, comprises a line load measuring step of measuring a line load of the communications medium; a line load calculating step of calculating a size of the line load; a transfer information generating step of generating transfer information by decreasing, in accordance with the line load, an information content of transfer scheduled information that is scheduled to be transferred when the calculated size of the line load is larger than a predetermined load, and by increasing, in accordance with the line load, an information content of the transfer scheduled information when the calculated size of the line load is smaller than the predetermined load; and an information transferring step of transferring the transfer information generated in the transfer information generating step to the client computer demanding the information.

In the second information transfer method, the line load of the communications medium is constantly measured. When the calculated line load is larger than the predetermined load, the transfer information is generated by decreasing the information content of the transfer scheduled information in accordance with the line load, and when the calculated line load is smaller than the predetermined load, the transfer information is generated by increasing the information content of the transfer scheduled information. The thus generated transfer information is transferred to the client computer, and hence, time required for the transfer can be shortened because the transfer information has a decreased content when the load is large. Therefore, the minimum essential information can be obtained without a waiting time. Furthermore, when the load is small, additional information in accordance with the load can be added to the transfer information, and hence, information for improving the quality of the transfer information can be added.

In the second information transfer method, the line load measuring step preferably includes a step of measuring the line load by using at least one of a number of packets flowing through the communications medium, a length of the packets, a number of collisions and a line activity ratio. Thus, the line load can be definitely measured.

The third information transfer method of this invention, used in a computer network including a server computer for storing and providing information and a client computer for demanding the information mutually connected through a communications medium, comprises a system load measuring step of measuring a system load of the server computer or the client computer; a system load calculating step of calculating a size of the system load; a transfer information generating step of generating transfer information by decreasing, in accordance with the system load, an information content of transfer scheduled information that is scheduled to be transferred when the calculated size of the system load is larger than a predetermined load, and by increasing, in accordance with the system load, an information content of the transfer scheduled information when the calculated size of the system load is smaller than the predetermined load; and an information transferring step of transferring the transfer information generated in the transfer information generating step to the client computer demanding the information.

In the third information transfer method, the system load of the server or client computer is constantly measured. When the calculated system load is larger than the predetermined load, the transfer information is generated by decreasing the information content of the transfer scheduled information in accordance with the system load, and when the calculated system load is smaller than the predetermined load, the transfer information is generated by increasing the information content of the transfer scheduled information in accordance with the system load. The thus generated transfer information is transferred to the client computer, and hence, time required for the transfer can be shortened because the transfer information has a decreased content when the load is large. Therefore, the essential information can be obtained without a waiting time. Furthermore, when the load is small, additional information in accordance with the load can be added to the transfer information, and hence, information for improving the quality of the transfer information can be added.

In the third information transfer method, the system load measuring step preferably includes a step of measuring the system load by using at least one of a CPU activity ratio, disk I/O switching times, page in/out switching times, a number of processes, a hit ratio of a CPU cache, a hit ratio of a disk cache and a data transfer amount of a system bus of the server or client computer. Thus, the system load can be definitely measured.

The fourth information transfer method of this invention, used in a computer network including a server computer for storing and providing information and a client computer for demanding the information mutually connected through a communications medium, comprises a load measuring step of measuring at least one of a line load of the communications medium, a system load of the server computer and a system load of the client computer; an information transfer reserving step of receiving an information transfer demand from the client computer and reserving transfer of the information as transfer reserved information; a load calculating step of calculating a transferable information content on the basis of the load measured in the load measuring step and instructing to start transfer of the transfer reserved information when the transferable information content is larger than an information content of the transfer reserved information; and an information transferring step of transferring the transfer reserved information to the client computer in response to instruction to start the transfer of the transfer reserved information.

In the fourth information transfer method, at least one of the line load of the communications medium, the system load of the server computer and the system load of the client computer is constantly measured. In response to the information transfer demand by the client computer, the demanded information is reserved as the transfer reserved information, and the transferable information content is calculated on the basis of the measured load. When the transferable information content is larger than the information content of the transfer reserved information, start of the transfer of the transfer reserved information is instructed. Therefore, the demanded information is transferred to the client computer when the load becomes small. Thus, the entire demanded information can be transferred to the client computer without fail.

The fifth information transfer method of this invention, used in a computer network including a server computer for storing and providing information and a client computer for demanding the information mutually connected through a communications medium, comprises a differential information generating step in the server computer of generating differential information for adding an information content to information having been transferred to the client computer; a load measuring step of measuring at least one of a line load of the communications medium, a system load of the server computer and a system load of the client computer; a load calculating step of calculating a transferable information content on the basis of the load measured in the load measuring step, and instructing to start transfer of the differential information when the transferable information content is larger than an information content of the differential information; a differential information transferring step of transferring the differential information to the client computer in response to instruction to start the transfer of the differential information; and a differential information adding step of adding the differential information to the information having been transferred to the client computer.

In the fifth information transfer method, at least one of the line load of the communications medium, the system load of the server computer and the system load of the client computer is constantly measured. In the server computer, the differential information for adding the information content to the information already transferred to the client computer is generated, and the transferable information content is calculated on the basis of the measured load. When the transferable information content is larger than the information content of the differential information, start of the transfer of the differential information is instructed. Therefore, the differential information corresponding to a part of the demanded information not transferred to the client computer can be transferred to the client computer when the load becomes small. As a result, the differential information can be added to the already transferred information, and hence, the quality of the already transferred information can be improved.

The sixth information transfer method of this invention, used in a computer network including a server computer for storing and providing information and a client computer for demanding the information mutually connected through a communications medium, comprises an information storing step of storing information having the same content in plural server computers; a load measuring step of measuring a line load between the client computer demanding the information and each of the plural server computers or at least a system load of each of the plural server computers; a load calculating step of instructing one of the server computers having the smallest load to start transfer of the information; and an information transferring step of transferring the information to the client computer in response to instruction to start the transfer of the information.

In the sixth information transfer method, the information having the same content is stored in the plural server computers, and the line load of the communications medium between the client computer and each of the plural server computers or at least the system load of each of the plural server computers is constantly measured. One of the server computers having the smallest load is instructed to start the transfer of the demanded information. Thus, the transfer information is transferred to the client computer from the server computer having the smallest load among the plural server computers. Therefore, the demanded information can be transferred to the client computer substantially without a waiting time.

In any of the fourth through sixth information transfer methods, the load measuring step preferably includes a step of measuring the line load by using at least one of a number of packets flowing through the communications medium, a length of the packets, a number of collisions and a line activity ratio, and measuring the system load by using at least one of a CPU activity ratio, disk I/O switching times, page in/out switching times, swap in/out switching times, a number of processes, a hit ratio of a CPU cache, a hit ratio of a disk cache and a data transfer amount of a system bus of the server or the client computer. Thus, the line load or the system load can be definitely measured.

In the first computer-readable recording medium of this invention for storing an information transfer program used in a computer network including a server computer for storing and providing information and a client computer for demanding the information mutually connected through a communications medium, a computer is operated as line load measuring means for measuring a line load of the communications medium; line load calculating means for calculating a size of the line load; transfer information generating means for generating transfer information by decreasing, in accordance with the line load, an information content of transfer scheduled information that is scheduled to be transferred when the calculated size of the line load is larger than a predetermined load, and by increasing, in accordance with the line load, an information content of the transfer scheduled information when the calculated size of the line load is smaller than the predetermined load; and information transferring means for transferring the transfer information generated by the transfer information generating means to the client computer demanding the information.

In the first computer-readable recording medium for storing an information transfer program, the line load measuring means preferably measures the line load by using at least one of a number of packets flowing through the communications medium, a length of the packets, a number of collisions and a line activity ratio.

In the second computer-readable recording medium of this invention for storing an information transfer program used in a computer network including a server computer for storing and providing information and a client computer for demanding the information mutually connected through a communications medium, a computer is operated as system load measuring means for measuring a system load of the server computer or the client computer; system load calculating means for calculating a size of the system load; transfer information generating means for generating transfer information by decreasing, in accordance with the system load, an information content of transfer scheduled information that is scheduled to be transferred when the calculated size of the system load is larger than a predetermined load, and by increasing, in accordance with the system load, an information content of the transfer scheduled information when the calculated size of the system load is smaller than the predetermined load; and information transferring means for transferring the transfer information generated by the transfer information generating means to the client computer demanding the information.

In the second computer-readable recording medium for storing an information transfer program, the system load measuring means preferably measures the system load by using at least one of a CPU activity ratio, disk I/O switching times, page in/out switching times, a number of processes, a hit ratio of a CPU cache, a hit ratio of a disk cache and a data transfer amount of a system bus of the server or client computer.

In the third computer-readable recording medium of this invention for storing an information transfer program used in a computer network including a server computer for storing and providing information and a client computer for demanding the information mutually connected through a communications medium, a computer is operated as load measuring means for measuring at least one of a line load of the communications medium, a system load of the server computer and a system load of the client computer; information transfer reserving means for receiving an information transfer demand from the client computer and reserving transfer of the information as transfer reserved information; load calculating means for calculating a transferable information content on the basis of the load measured by the load measuring means and instructing to start transfer of the transfer reserved information when the transferable information content is larger than an information content of the transfer reserved information; and information transferring means for transferring the transfer reserved information to the client computer in response to instruction to start the transfer of the transfer reserved information.

In the fourth computer-readable recording medium of this invention for storing an information transfer program used in a computer network including a server computer for storing and providing information and a client computer for demanding the information mutually connected through a communications medium, a computer is operated as differential information generating means in the server computer for generating differential information for adding an information content to information having been transferred to the client computer; load measuring means for measuring at least one of a line load of the communications medium, a system load of the server computer and a system load of the client computer; load calculating means for calculating a transferable information content on the basis of the load measured by the load measuring means, and instructing to start transfer of the differential information when the transferable information content is larger than an information content of the differential information; differential information transferring means for transferring the differential information to the client computer in response to instruction to start the transfer of the differential information; and differential information adding means for adding the differential information to the information having been transferred to the client computer.

In the fifth computer-readable recording medium of this invention for storing an information transfer program used in a computer network including a server computer for storing and providing information and a client computer for demanding the information mutually connected through a communications medium, a computer is operated as information storing means for storing information having the same content in plural server computers; load measuring means for measuring a line load between the client computer demanding the information and each of the plural server computers or at least a system load of each of the plural server computers; load calculating means for instructing one of the server computers having the smallest load to start transfer of the information; and information transferring means for transferring the information to the client computer in response to instruction to start the transfer of the information.

In any of the third through fifth computer-readable recording media for storing an information transfer program, the load measuring means preferably measures the line load by using at least one of a number of packets flowing through the communications medium, a length of the packets, a number of collisions and a line activity ratio, and measures the system load by using at least one of a CPU activity ratio, disk I/O switching times, page in/out switching times, swap in/out switching times, a number of processes, a hit ratio of a CPU cache, a hit ratio of a disk cache and a data transfer amount of a system bus of the server or the client computer.

### BRIEF DESCRIPTION OF THE DRAWINGS

Figure 1 is a diagram for showing the system configuration of an information transfer unit according to a first embodiment of the invention;
Figure 2 is a flowchart for showing a line load measuring procedure in an information transfer method according to the first embodiment;
Figure 3 is a format diagram of a line load data table used in information transfer methods according to first, third and fourth embodiments of the invention;
Figure 4 is a flowchart for showing a line load calculating procedure in the information transfer method of the first embodiment;
Figure 5 is a diagram of an information retrieval demanding format used in the information transfer methods according to first through fifth embodiments of the invention;
Figure 6 is a graph for showing a curve for calculating a transferable information content per second used in the information transfer methods of the first through fifth embodiments;
Figure 7 is a flowchart for showing a transfer information generating procedure in the information transfer method of the first embodiment;
Figure 8 is a flowchart for showing an information transferring procedure in the information transfer method of the first embodiment;
Figure 9 is a diagram for showing the system configuration of an information transfer unit according to a second embodiment of the invention;
Figure 10 is a flowchart for showing a system load measuring procedure in the information transfer method of the second embodiment;
Figure 11 is a format diagram of a server load data table used in the information transfer methods of the second through fourth embodiments of the invention;
Figure 12 is a format diagram of a client load data table used in the information transfer methods of the second through fourth embodiments of the invention;
Figure 13 is a flowchart for showing a system load calculating procedure in the information transfer method of the second embodiment;
Figure 14 is a diagram for showing the system configuration of an information transfer unit according to the third embodiment of the invention;
Figure 15 is a flowchart for showing a load measuring procedure in the information transfer method of the third embodiment;
Figure 16 is a flowchart for showing an information transfer reserving procedure in the information transfer method of the third embodiment;
Figure 17 is a format diagram of an information transfer reservation table used in the information transfer method of the third embodiment;
Figure 18 is a flowchart for showing a load calculating procedure in the information transfer method of the third embodiment;
Figure 19 is a flowchart for showing an information transferring procedure in the information transfer method of the third embodiment;
Figure 20 is a diagram for showing the system configuration of an information transfer unit according to the fourth embodiment of the invention;
Figure 21 is a flowchart for showing a differential data generating procedure in the information transfer method of the fourth embodiment;
Figure 22 is a format diagram of a differential data management table used in the information transfer method of the fourth embodiment;
Figure 23 is a flowchart for showing a load calculating procedure in the information transfer method of the fourth embodiment;
Figure 24 is a flowchart for showing a differential information transferring procedure in the information transfer method of the fourth embodiment;
Figure 25 is a flowchart for showing a differential information adding procedure in the information transfer method of the fourth embodiment;
Figure 26 is a diagram for showing the system configuration of an information transfer unit according to the fifth embodiment of the invention;
Figure 27 is a flowchart for showing an information storing procedure in the information transfer method of the fifth embodiment;
Figure 28 is a flowchart for showing a load measuring procedure in the information transfer method of the fifth embodiment;
Figure 29 is a format diagram of a line load data table used in the information transfer method of the fifth embodiment;
Figure 30 is a format diagram of a server load data table used in the information transfer method of the fifth embodiment;
Figure 31 is a flowchart for showing a load calculating procedure in the information transfer method of the fifth embodiment;
Figure 32 is a flowchart for showing an information transferring procedure in the information transfer method of the fifth embodiment; and
Figure 33 is a diagram for showing the system configuration of a conventional information transfer unit.

### DETAILED DESCRIPTION OF THE INVENTION

Information assumed to be dealt with by an information transfer unit of this invention includes still images, dynamic images, speech information, etc. each of which has, when stored in a computer, a large information content of, for example, at least several megabytes or more. Therefore, in transferring such information to a computer connected through a computer network, an information content of several megabytes or more should be transferred. This leads to a very large load to be applied to transmitting and receiving computers and the computer network working as the transfer line, and hence, the information cannot be transferred or the transfer requires a very long period of time. Also, the transfer of information having such a large information content can largely affect not only the server computer and the client computer but also other resources, and hence, other jobs using other transmitting and receiving computers and the computer network cannot be completed.

### (Embodiment 1)

A first embodiment of the invention will now be described with reference to the accompanying drawings.

According to the first embodiment, in the case where a client computer demands information transfer of a server computer, a line load of a computer network serving as a communications medium, i.e., a transfer line, is calculated on the basis of load data previously stored. Transfer information which can be transferred is then generated in accordance with the line load, and the generated information is transferred to the client computer within a short period of time (desired by the client computer).

When the line load is large, the transfer information with a smaller information content is generated, for example, by decreasing the number of pixels, the number of display colors, etc. for expressing the information with regard to still image information, by decreasing time components with regard to dynamic image information, and by decreasing high frequency components with regard to speech information, so as to transfer the generated information within the desired time period. Alternatively, when the line load is small, the transfer information with a larger information content is generated by increasing the number of pixels, the number of display colors, etc. for expressing the information with regard to still image information, by increasing the time components with regard to dynamic image information and by increasing the high frequency components with regard to speech information, so as to transfer the information with improved quality.

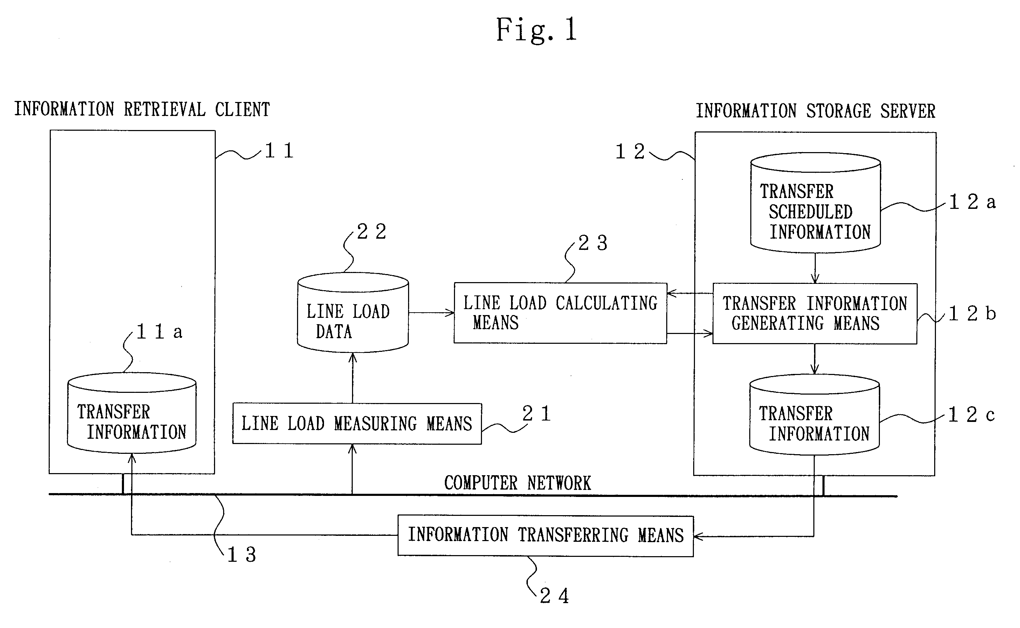

Figure 1 is a diagram for showing the system configuration of an information transfer unit of this embodiment. As is shown in Figure 1, an information retrieval client 11, that is, a client computer for demanding information retrieval, is connected with an information storage server 12, that is, a server computer for storing and providing the information, through a computer network 13 working as a communications medium such as a LAN (local area network).

This information transfer unit comprises line load measuring means 21, line load calculating means 23, transfer information generating means 12b and information transferring means 24 respectively working as follows: The line load measuring means 21 is connected with the computer network 13 so as to constantly measure the line load of the computer network 13 and stores the results of the measurement in a line load data base 22 as line load data. The line load calculating means 23 extracts, when the information retrieval client 11 demands information retrieval of the information storage server 12, line load data at a past time closest to the time of the demand from the line load data base 22, and calculates a transferable information content in accordance with the extracted line load data. In the case where transfer scheduled information extracted from a transfer scheduled data base 12a has a larger information content than the transferable information content, the transfer information generating means 12 generates transfer information by decreasing the information content of the transfer scheduled information in accordance with the line load, and then, stores the generated transfer information in a transfer information data base 12c. In the case where the transfer scheduled information has a smaller information content than the transferable information content, the transfer information generating means 12b generates the transfer information by increasing the information content of the transfer scheduled information in accordance with the line load, and then, stores the generated transfer information in the transfer information data base 12c. The information transferring means 24 extracts the transfer information from the transfer information data base 12c of the information storage server 12, and transfers the extracted transfer information to the information retrieval client 11.

Now, an information transfer method by the information transfer unit having the aforementioned system configuration will be described with reference to the accompanying drawings.

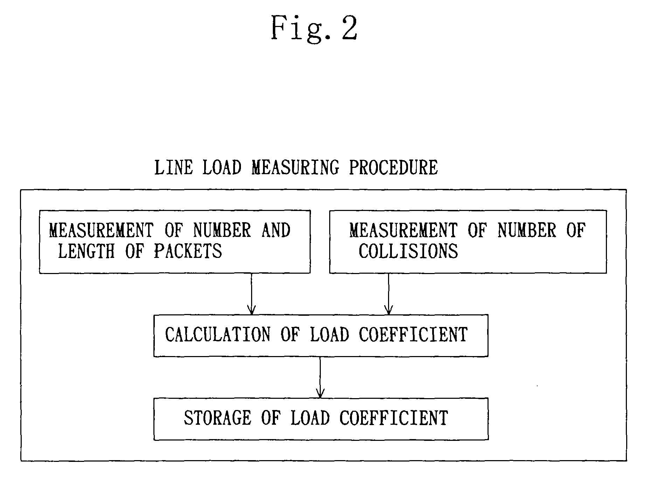

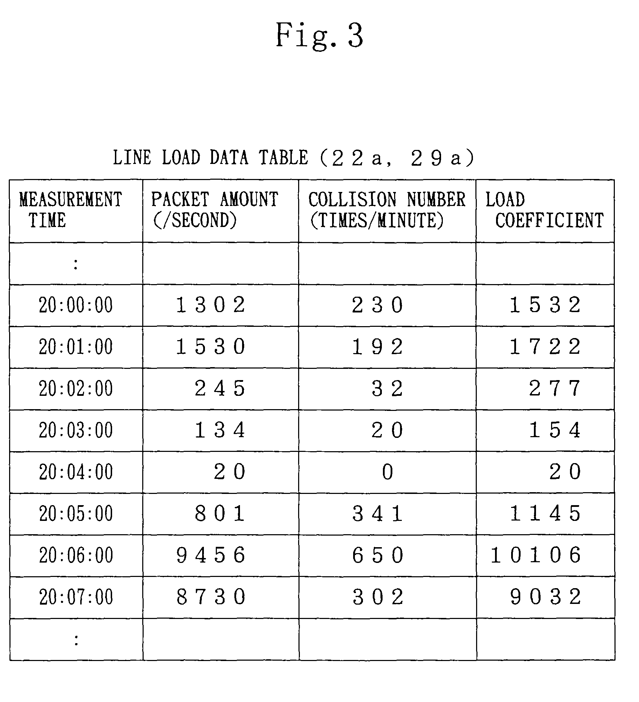

First, as is shown in a flowchart of a line load measuring procedure of Figure 2, the line load measuring means 21 of Figure 1 measures, for example, every minute, the number and the length of packets flowing through the computer network 13 per predetermined period of time (for example, one second), so as to calculate a packet amount (by producing the number of packets by the length), and registers the calculated packet amount in an item of the packet amount in a line load data table 22a as is shown in Figure 3 together with the measurement time. Also, the line load measuring means 21 measures, for example, every minute, the number of collisions occurring on the computer network 13 per predetermined period of time (for example, one minute), and registers the number of the collisions in an item of the collision number in the line load data table 22a together with the measurement time. Furthermore, the line load measuring means 21 calculates, on the basis of the packet amount and the collision number measured at the same measurement time, a load coefficient (obtained, for example, by adding the packet amount to the collision number), and registers the calculated load coefficient in an item of the load coefficient at the corresponding measurement time in the line load data table 22a.

The method of measuring the number and length of the packets and the number of the collisions is not herein specified and they can be measured by using a known network monitoring tool or the like. The interval and the time period for measuring the packet amount and the collision number are also not specified.

Furthermore, in calculating the load coefficient, a weighting can be given to each element before the addition. For example, a weighting can be given to either the packet amount or the collision number in accordance with the line state, or a smaller weighting can be given to a more preceding element. Moreover, a line activity ratio can be measured to be used for calculating the load coefficient.

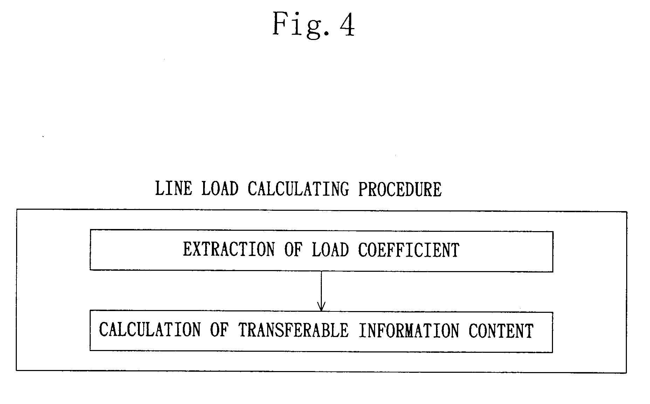

Next, as is shown in a flowchart of a line load calculating procedure of Figure 4, the line load calculating means 23 of Figure 1 starts to calculate the line load of the computer network 13 at the time of the information retrieval demand by the information retrieval client 11 of the information storage server 12.

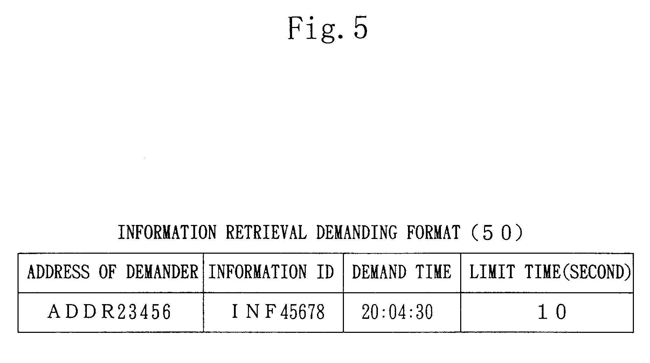

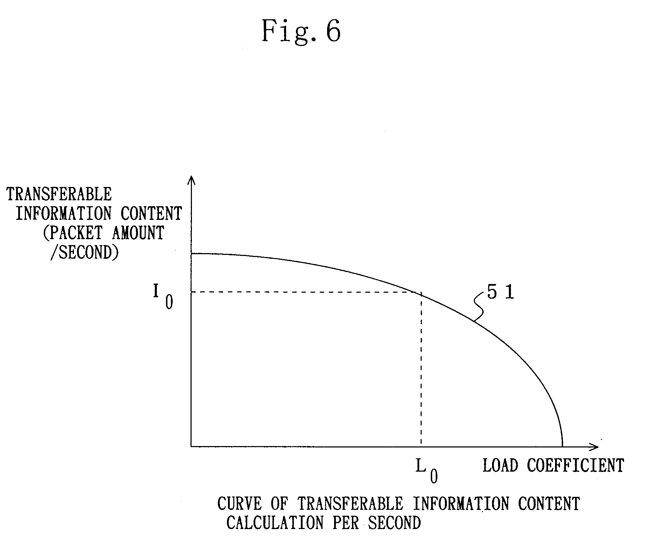

Specifically, the line load calculating means 23 extracts the time of the demand from an information retrieval demanding format 50 as is shown in Figure 5, that is, a message received by the information storage server 12, and searches the measurement times in the line load data table 22a of Figure 3 for a record having a past time closest to the time of the retrieval demand by the information retrieval client 11 so as to extract the line load at that time. Then, the line load calculating means 23 obtains a transferable information content per second on the basis of the extracted load coefficient by using a transferable information content calculation curve 51, shown in Figure 6, working as an index for calculating a transferable information content per one second in accordance with the load coefficient.

The transferable information content calculation curve 51 shown in Figure 6 is set as follows: When, for example, a reference load coefficient is indicated as a reference coefficient L0 and a transferable information content according to the reference coefficient L0 is indicated as a reference information content I0, in the case where the load coefficient extracted from the line load data table 22a is larger than the reference coefficient L0, the transferable information content is smaller than the reference information content I0, and in the case where the load coefficient is smaller than the reference coefficient L0, the transferable information content is larger than the reference information content I0. The transferable information content calculation curve 51 is preferably in conformity with the network environment and can be built by measuring transferable information contents with the load changed in the actual environment, but the method of building the transferable information content calculation curve 51 is not herein specified.

Furthermore, in extracting the load coefficient from the line load data table 22a of Figure 3, a weighting can be given to each of load coefficients in a past predetermined period of time (for example, 10 minutes) and an average of the resultant load coefficients can be calculated as the load coefficient.

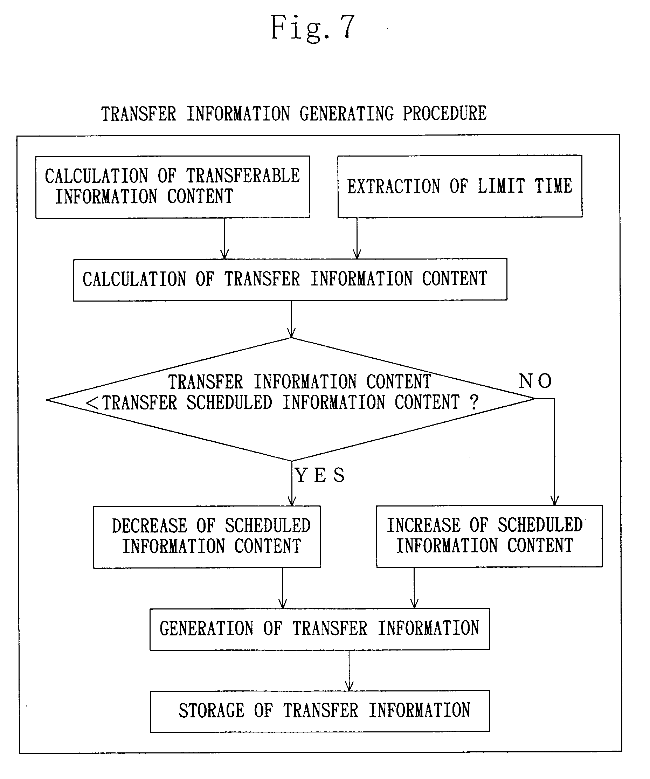

Then, as is shown in a flowchart of a transfer information generating procedure of Figure 7, the transfer information generating means 12b of Figure 1 generates the transfer information from the transfer scheduled information 12a on the information storage server 12 on the basis of the transferable information content per second obtained by the line load calculating means 23, and stores the generated transfer information in the transfer information data base 12c.

Specifically, the transfer information generating means 12b extracts a limit time from the information retrieval demanding format 50 of Figure 5, and calculates a transfer information content transferable within the limit time (by producing the limit time by the transferable information content per second) on the basis of the transferable information content per second.

In the case where the calculated transfer information content is smaller than an initial information content of the transfer scheduled information (i.e., the transfer information content < the transfer scheduled information content), the content of the transfer scheduled information is decreased to the transfer information content, thereby generating new transfer information. Alternatively, in the case where the calculated transfer information content is equal to or larger than the transfer scheduled information content (i.e., the transfer information content ≥ the transfer scheduled information content), additional information is added to the transfer scheduled information until the content becomes equal to the transfer information content, thereby generating new transfer information. Then, the generated new transfer information is stored in the transfer information data base 12c.

The transfer information can be generated by increasing/decreasing the number of pixels, the high frequency components, the number of display colors, the number of gray scale levels or time base components, and the method of generating the transfer information is not herein specified. Furthermore, in the case where the calculated transfer information content is equal to or larger than the transfer scheduled information content (i.e., the transfer information content ≥the transfer scheduled information content), the transfer scheduled information can be transferred as the transfer information without adding any information content.

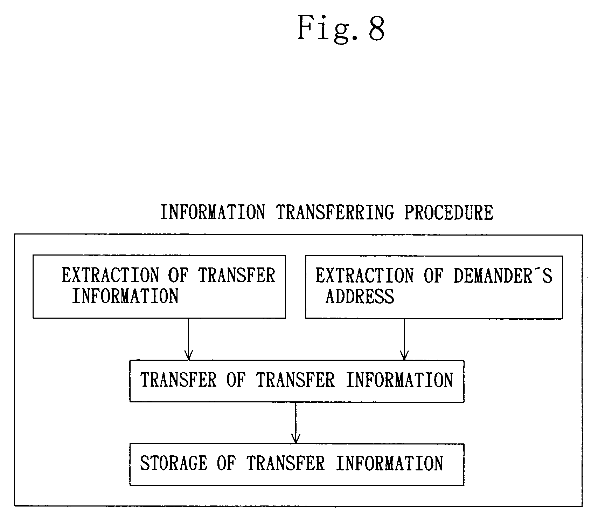

Next, as is shown in a flowchart of an information transferring procedure of Figure 8, the information transferring means 24 of Figure 1 extracts the transfer information from the information storage server 12 and transfers the extracted transfer information to the information retrieval client 11.

Specifically, the information transferring means 24 extracts the transfer information from the transfer information data base 12c of the information storage server 12, extracts an address of the demander from the information retrieval demanding format 50 of Figure 5, and transfers the transfer information generated by the information storage server 12 to the information retrieval client 11 corresponding to the address of the demander through the computer network 13, so that the transfer information can be stored in a storage of the information retrieval client 11.

The method of transferring the information is not herein specified, and the transfer information can be transferred by using a generally available file transfer or the like.

In this manner, according to this embodiment, when the line load is large, the demanded information can be retrieved within a desired period of time by decreasing the information content in accordance with the line load of the computer network 13 at the time of the retrieval demand. In addition, when the load is small, the information retrieval client 11 can be provided with information with higher quality by adding an additional information content.

The installation places of the line load measuring means 21, the line load data base 22, the line load calculating means 23, the transfer information generating means 12b, the transfer information data base 12c and the information transferring means 24 are not limited to those described in this embodiment, and they can be installed on any computers accessible through the network.

Moreover, the computer working as the information transfer unit for realizing the information transfer method of this embodiment can be of any configuration as far as it includes a CPU, a main storage, an auxiliary storage such as a magnetic disk drive and an optical magnetic disk drive, an input-output unit working as a man-machine interface and data circuit-terminating equipment such as a MODEM.

Accordingly, when an information transfer program for realizing the information transfer method of this embodiment is programed and the information transfer program is recorded in a recording medium readable by the computer, the information transfer program according to this embodiment can be loaded in the main storage of the computer by setting the recording medium in the auxiliary storage of the computer. Thus, the predetermined function of each means can be executed by the CPU of the computer when a predetermined operation timing (i.e., an event) occurs.

It is noted that a computer for realizing an information transfer unit according to each of the following embodiments has the same configuration as the computer for realizing the information transfer unit of this embodiment.

### (Embodiment 2)

A second embodiment of the invention will now be described with reference to the accompanying drawings.

According to this embodiment, when a client computer demands information transfer of a server computer, system loads of transmitting and receiving computers are calculated by using load data previously stored, and transfer information transferable in accordance with the system loads is newly generated, so that the generated transfer information can be transferred within a short period of time (desired by the client computer).

When the system loads are large, transfer information with a decreased information content is newly generated, for example, by decreasing the number of pixels, the number of display colors, etc. for expressing the information with regard to still image information, by decreasing time components with regard to dynamic image information and by decreasing high frequency components with regard to speech information, so that the generated information can be transferred within the desired period of time. Alternatively, when the system loads are small, the transfer information with an increased information content is newly generated by increasing the number of pixels, the number of display colors, etc. for expressing the information with regard to still image information, by increasing the time components with regard to dynamic image information and by increasing the high frequency components with regard to speech information, so that the generated transfer information with improved quality can be transferred.

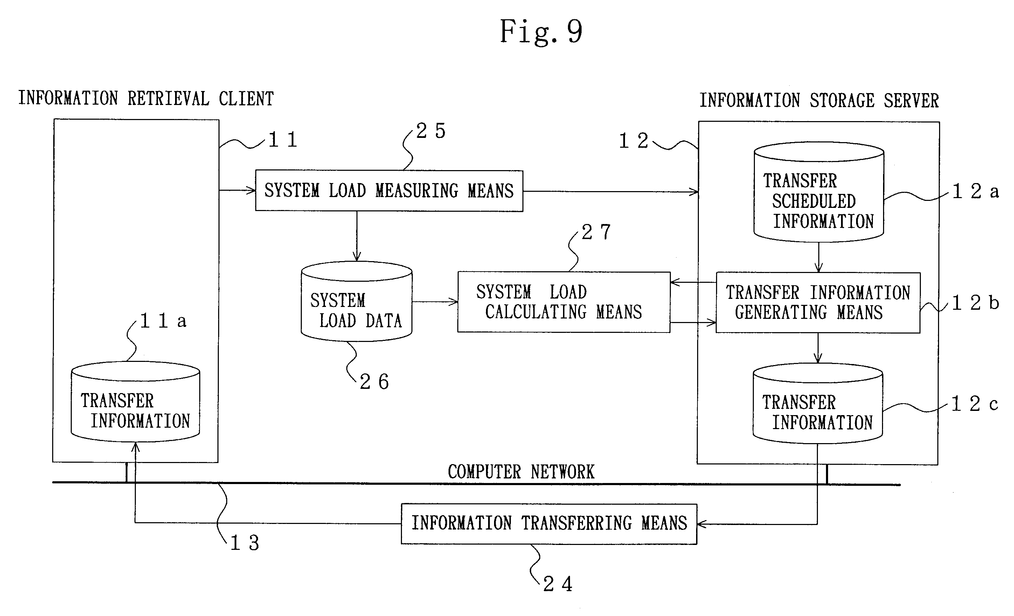

Figure 9 is a diagram for showing the system configuration of an information transfer unit according to the second embodiment. As is shown in Figure 9, an information retrieval client 11 corresponding to a client computer for demanding information retrieval is connected with an information storage server 12 corresponding to a server computer for storing and providing the information through a computer network 13 working as a communications medium such as a LAN.

This information transfer unit comprises system load measuring means 25, system load calculating means 27, transfer information generating means 12b and information transferring means 24 respectively working as follows: The system load measuring means 25 is connected with the information retrieval client 11 and the information storage server 12, so as to constantly measure the system loads of the information retrieval client 11 and the information storage server 12 and stores the results of the measurement in a system load data base 26 as system load data. The system load calculating means 27 extracts, when the information retrieval client 11 demands the information retrieval of the information storage server 12, the system load data at a past time closest to the time of the demand from the system load data base 26, and calculates a transferable information content in accordance with the extracted system load data. When transfer scheduled information extracted from a transfer scheduled data base 12a has a larger content than the transferable information content, the transfer information generating means 12b generates transfer information by decreasing the information content of the transfer scheduled information in accordance with the system loads, and then stores the generated transfer information in a transfer information data base 12c. Furthermore, when the transfer scheduled information has a smaller content than the transferable information content, the transfer information generating means 12b generates transfer information by increasing the information content of the transfer scheduled information in accordance with the system loads, and then stores the generated transfer information in the transfer information data base 12c. The information transferring means 24 extracts the transfer information from the transfer information data base 12c of the information storage server 12, and transfers the extracted transfer information to the information retrieval client 11.

Now, a method of transferring information by the information transfer unit having the aforementioned system configuration will be described with reference to the accompanying drawings.

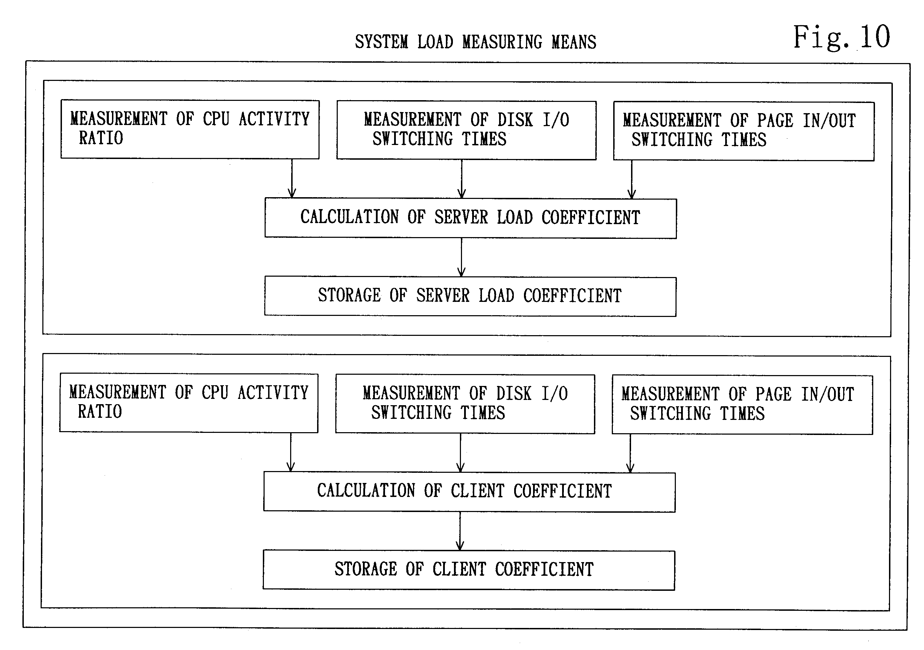

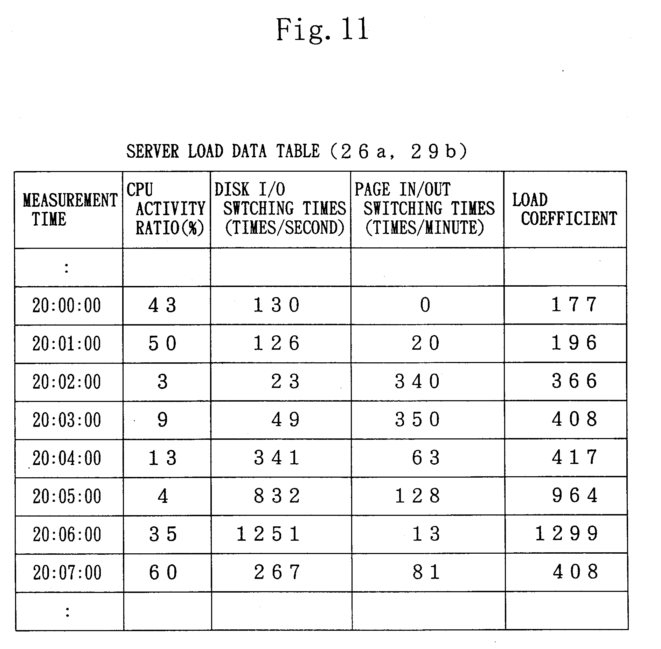

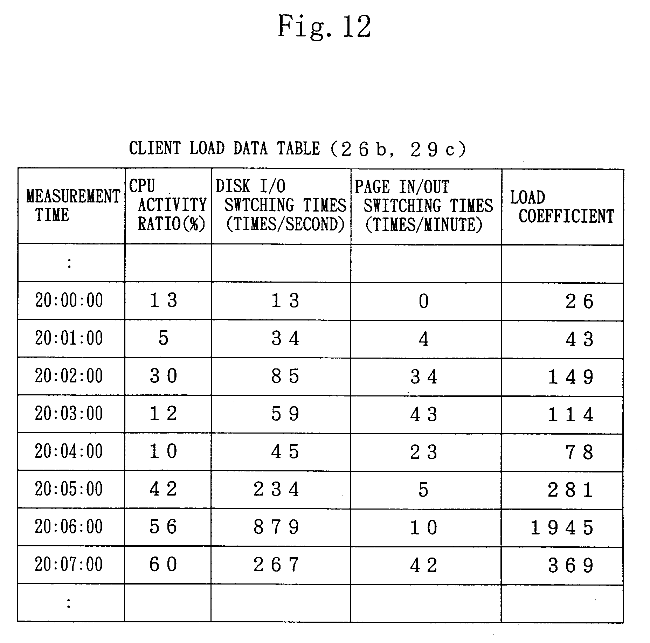

First, as is shown in a flowchart of a system load measuring procedure of Figure 10, the system load measuring means 25 of Figure 9 measures, for example, every minute, the system loads of the information storage server 12 and the information retrieval client 11 per a predetermined time period (for example, one second), so that a CPU activity ratio, disk I/O switching times and page in/out switching times can be registered together with a measurement time, in corresponding items in a server load data table 26a of Figure 11 and a client load data table 26b of Figure 12 in the system load data base 26. Furthermore, on the basis of the CPU activity ratio, the disk I/O switching times and the page in/out switching times measured at the same measurement time, a load coefficient is calculated (for example, by adding the CPU activity ratio, the disk I/O switching times and the page in/out switching times to one another), and the calculated load coefficient is registered in an item of the load coefficient at the corresponding measurement time in the server load data table 26a or the client load data table 26b.

The CPU activity ratio, the disk I/O switching times and the page in/out switching times can be measured by a known system monitoring tool or the like, and the method of measuring them is not herein specified. The interval and the time period for measuring the CPU activity ratio, the disk I/O switching times and the page in/out switching times are also not herein specified. Furthermore, in calculating the load coefficient, a weighting can be given to each element before the addition. For example, a weighting can be given to any of the CPU activity ratio, the disk I/O switching times and the page in/out switching times in accordance with the line state, or alternatively, a smaller weighting can be given to a more preceding element.

Furthermore, swap in/out switching times, the number of processes, a hit ratio of a CPU cache, a hit ratio of a disk cache or a data transfer amount of a system bus can be measured to be used for calculating the load coefficient.

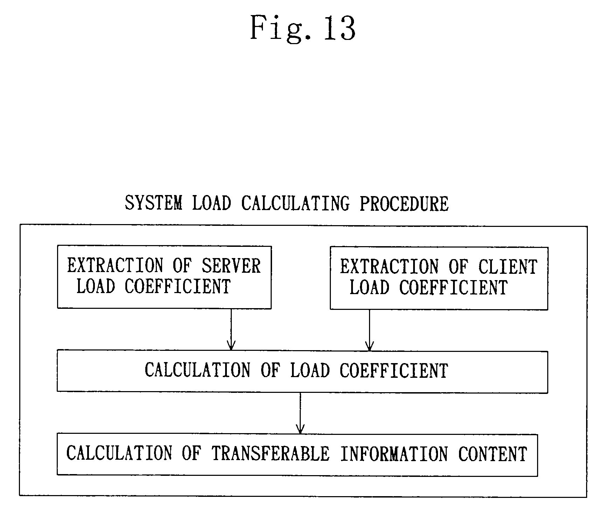

Next, as is shown in a flowchart of a system load calculating procedure of Figure 13, the system load calculating means 27 of Figure 9 starts to calculate the system loads of the information storage server 12 and the information retrieval client 11 at the time of the information retrieval demand by the information retrieval client 11 of the information storage server 12.

Specifically, the system load calculating means 27 extracts the demand time from an information retrieval demanding format 50 of Figure 5, i.e., a message received from the information storage server 12, and seaches the measurement times in the server load data table 26a of Figure 11 and the client load data table 26b of Figure 12 for a record having a past time closest to the time of the retrieval demand by the information retrieval client 11 so as to extract the respective load coefficients at that time. Then, the system load calculating means 27 obtains a transferable information content per second on the basis of the extracted load coefficients by using a transferable information content calculation curve 51 of Figure 6 serving as an index for calculating a transferable information content per second in accordance with the load coefficient.

The transferable information content calculation curve 51 is preferably in conformity with the network environment and can be built by measuring transferable information contents with the load changed in the actual environment, but the method of building the transferable information content calculation curve 51 is not herein specified.

Also, in extracting the load coefficients from the server load data table 26a of Figure 11 and the client load data table 26b of Figure 12, a weighting can be given to each of load coefficients in the tables 26a and 26b in a past predetermined time period (for example, 10 minutes), so as to calculate an average of the load coefficients with the weighting given. Furthermore, in obtaining the average value of the load coefficients of the information storage server 12 and the information retrieval client 11, a weighting can be given to each load coefficient before calculating the average value.

The transfer information generating means 12b and the information transferring means 24 of Figure 9 are operated in the same manner as the corresponding means described in the first embodiment, and the description is omitted.

In this manner, according to this embodiment, when the system loads are large, the demanded information can be retrieved within a desired time period by decreasing the information content in accordance with the system loads of the information storage server 12 and the information retrieval client 11 at the time of the demand. In addition, when the system loads are small, an additional information content can be added, so that information with improved quality can be provided to the information retrieval client 11.

The installation places of the system load measuring means 25, the system load data base 26, the system load calculating means 27, the transfer information generating means 12b, the transfer information data base 12c and the information transferring means 24 are not limited to those described in this embodiment, and they can be installed on any computers accessible through the network.

### (Embodiment 3)

A third embodiment of the invention will now be described with reference to the accompanying drawings.

According to this embodiment, system loads of transmitting and receiving computers and a line load of a computer network, that is, a transfer line, are calculated by using load data constantly measured and stored, so that demanded information can be reserved to be transferred in the case where the loads are small and that the information can be transferred when the loads become actually small.

Specifically, the information is transferred when the system loads or the line load is so small that the information can be transferred within a desired time period.

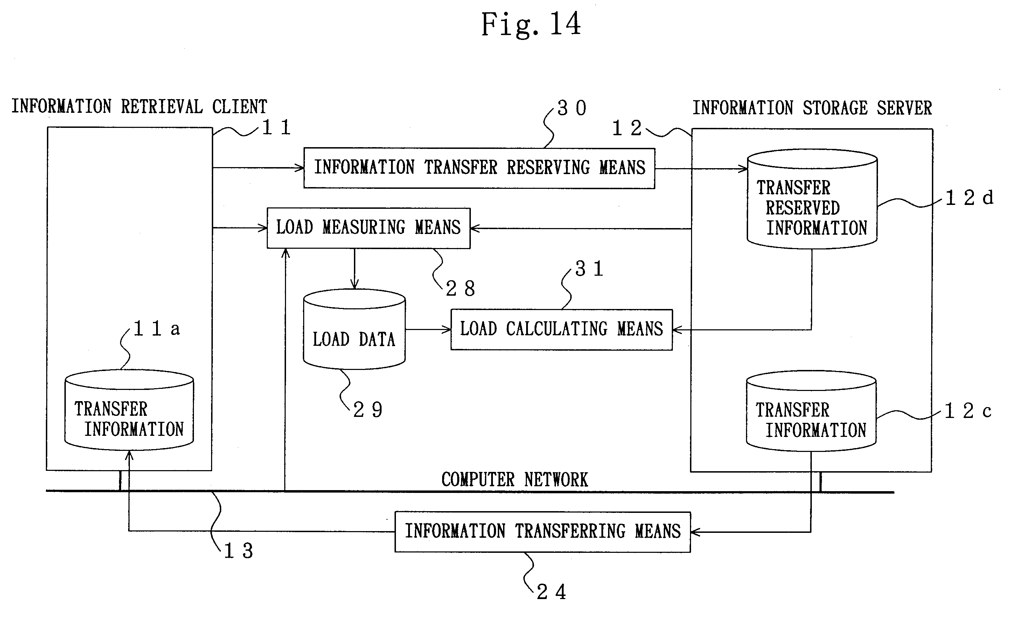

Figure 14 is a diagram for showing the system configuration of an information transfer unit of the third embodiment. As is shown in Figure 14, an information retrieval client 11 corresponding to a client computer for demanding informaiton retrieval is connected with an information storage server 12 corresponding to a server computer for storing and providing the information through a computer network 13 working as a communications medium such as a LAN.

This information transfer unit comprises load measuring means 28, information transfer reserving means 30, load calculating means 31 and information transferring means 24 respectively working as follows: The load measuring means 28 is connected with the computer network 13, the information retrieval client 11 and the information storage server 12, so as to constantly measure the line load of the computer network 13 and the system loads of the information retrieval client 11 and the information storage server 12, and stores the results of the measurement in a load data base 29 as load data. When the information retrieval client 11 demands information retrieval of the information storage server 12, the information transfer reserving means 30 reserves the address of the demander, the information ID and the limit time for the transfer. Also, when the information retrieval client 11 demands information retrieval of the information storage server 12, the load calculating means 31 extracts the load data at a past time closest to the time of the demand from the load data base 29, and calculates a transferable information content in accordance with the extracted load data. In addition, in the case where transfer scheduled information extracted from a transfer scheduled data base 12d has a larger content than the transferable information content, the load calculating means 31 holds the transfer of the information, and in the case where the transfer scheduled information has a smaller content than the transferable information content, the load calculating means 31 instructs the information transferring means 24 to start the transfer of the information. The information transferring means 24 extracts the demanded transfer information from a transfer information data base 12c of the information storage server 12 in response to the instruction from the load calculating means 31 to start the transfer, and transfers the extracted transfer information to the information retrieval client 11.

Now, a method of transferring information by the information transfer unit having the aforementioned system configuration will be described with reference to the accompanying drawings.

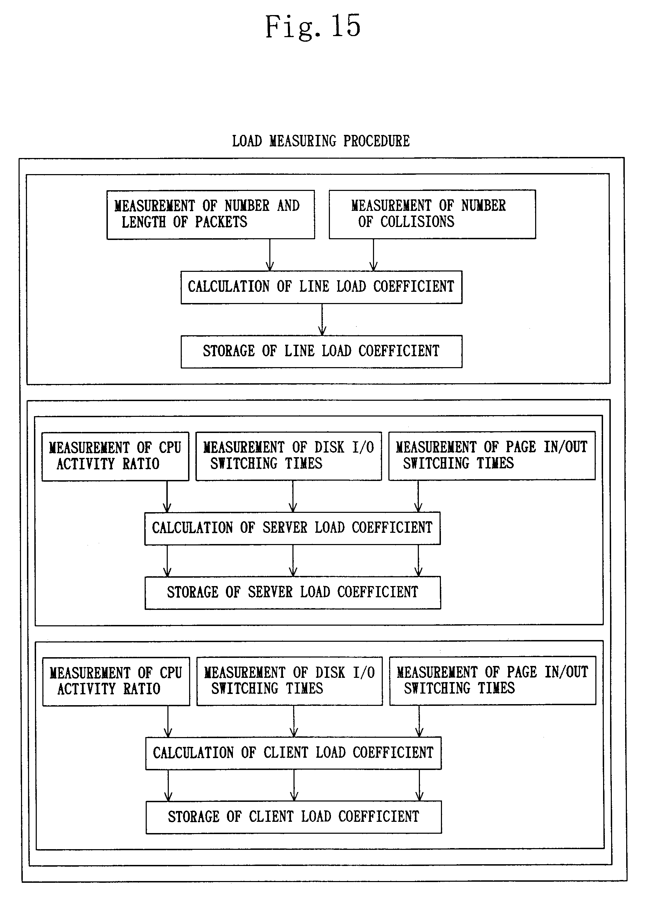

First, as is shown in a flowchart of a load measuring procedure of Figure 15, the load measuring means 28 of Figure 14 measures, for example, every minute, the number and the length of packets flowing through the computer network 13 per predetermined time period (for example, one second), calculates a packet amount (by producing the number of the packets by the length), and registers the calculated packet amount in an item of the packet amount in a line load data table 29a of Figure 3 in the load data base 29 together with the measurement time. Furthermore, the load measuring means 28 measures, for example, every minute, the number of collisions occurring in the computer network 13 per predetermined time period (for example, one minute), and registers the number of collisions in a corresponding item in the line load data table 29a together with the measurement time. Also, the load measuring means 28 calculates a load coefficient on the basis of the packet amount and the number of collisions measured at the same measurement time (for example, by adding the packet amount to the number of collisions), and registers the calculated load coefficient in an item of the load coefficient at the corresponding measurement time in the line load data table 29a.

The number and the length of packets and the number of collisions can be measured by a known network monitoring tool or the like, and the method of measuring them is not herein specified. The interval and the time period for measuring the packet amount and the number of collisions are also not specified.

Furthermore, in calculating the load coefficient, a weighting can be given to each element before the addition. For example, a weighting can be given to either the packet amount or the number of collisions in accordance with the line state, or alternatively, a smaller weighting can be given to a more preceding element. Moreover, a line activity ratio can be measured to be used for calculating the load coefficient.

Also, the load measuring means 28 measures, for example, every minute, the system loads of the information storage server 12 and the information retrieval client 11 per predetermined time period (for example, one second), and registers a CPU activity ratio, disk I/O switching times and page in/out switching times in corresponding items in a server load data table 29b of Figure 11 or a client load data table 29c of Figure 12 in the load data base 29 together with the measurement time. Furthermore, the load measuring means 28 calculates a load coefficient on the basis of the CPU activity ratio, the disk I/O switching times and the page in/out switching times measured at the same measurement time (for example, by adding the CPU activity ratio, the disk I/O switching times and the page in/out switching times to one another), and registers the calculated load coefficient in an item of the load coefficient at the corresponding measurement time in the server load data table 29b or the client load data table 29c.

The CPU activity ratio, the disk I/O switching times and the page in/out switching times can be measured by using a known system monitoring tool or the like, and the method of measuring them is not herein specified. The interval and the time period for measuring the CPU activity ratio, the disk I/O switching times and the page in/out switching times are also not specified. Furthermore, in calculating the load coefficient, a weighting can be given to each element before the addition. For example, a weighting can be given to any of the CPU activity ratio, the disk I/O switching times and the page in/out switching times in accordance with the line state, or alternatively, a smaller weighting can be given to a more preceding element.

Swap in/out switching times, the number of processes, a hit ratio of a CPU cache, a hit ratio of a disk cache or a data transfer amount of a system bus can be measured to be used for calculating the load coefficient.

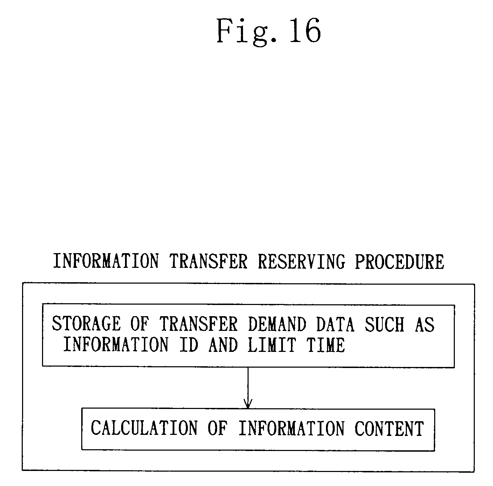

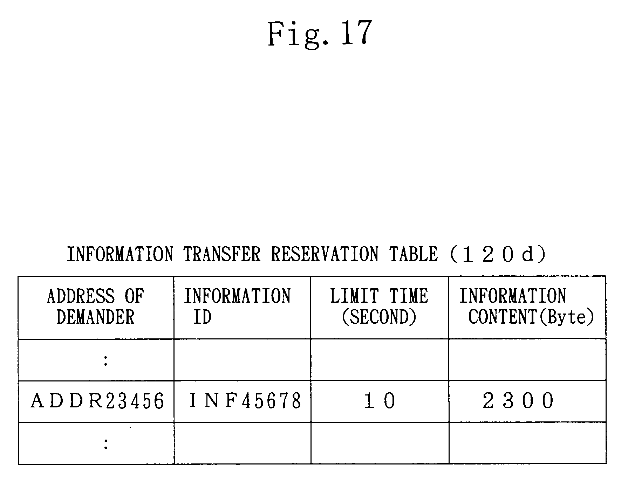

Next, as is shown in a flowchart of an information transfer reserving procedure of Figure 16, at the same time as the information retrieval demand by the information retrieval client 11 of the information storage server 12, the information transfer reserving means 30 of Figure 14 registers an address of a demander, i.e., the address of the information retrieval client 11, information ID for identifying the demanded information and a limit time corresponding to an allowable time range required for the transfer in an information transfer reservation table 120d of Figure 17 in the transfer reserve data base 12d. Also, the information transfer reserving means 30 detects the information content of the demanded information from the information ID, and registers the information content in a corresponding item in the information transfer reservation table 120d.

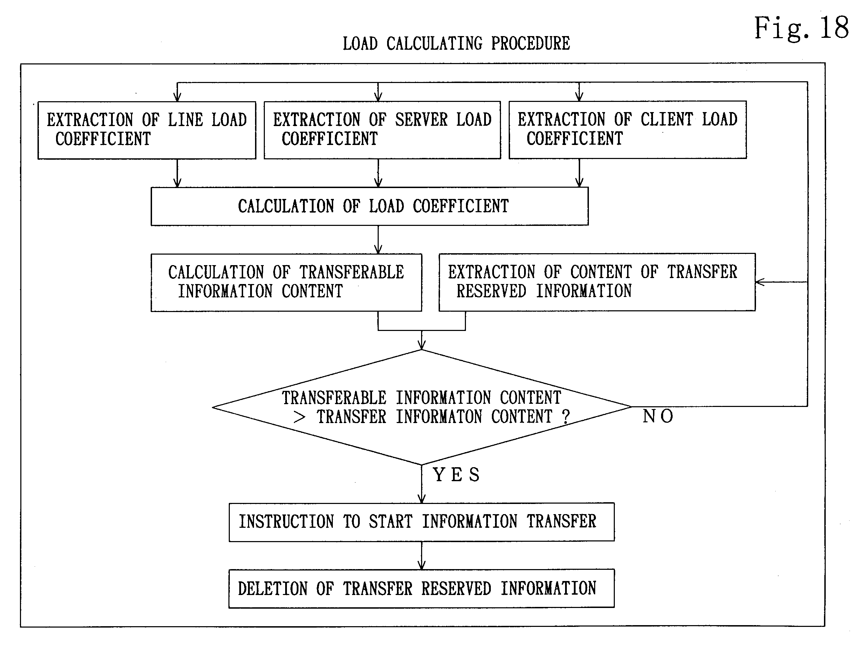

Next, as is shown in a flowchart of a load calculating procedure of Figure 18, at the time of the information retrieval demand by the information retrieval client 11 of the information storage server 12, the load calculating means 31 of Figure 14 calculates, for example, every minute, the line load of the computer network 13 and the system loads of the information storage server 12 and the information retrieval client 11.

Specifically, the number of records in the information transfer reservation table 120d of Figure 17 in the transfer reserve data base 12d is retrieved every minute, all the registered records are extracted, and an information content of the reserved information is extracted. In addition, the line load data table 29a of Figure 3, the server load data table 29b of Figure 11 and the client load data table 29c of Figure 12 are searched for records having a past time closest to the current time on the basis of the respective measurement times, thereby extracting the load coefficients, and a comprehensive load coefficient is calculated by, for example, obtaining an average of the load coefficients. Then, a transferable information content per second is obtained from the calculated load coefficient by using a transferable information content calculation curve 51 of Figure 6, and then, the limit time of the corresponding information is extracted from the information transfer reservation table 120d of Figure 17, so as to calculate a transferable information content by producing the transferable information content per second by the limit time. Next, when the information content of the reserved information is smaller than the transferable information content (i.e., the transfer reserved information content < the transferable information content), the information transferring means 24 is instructed to start the transfer of the reserved information, and then the record of the corresponding reserved information is deleted from the information transfer reservation table 120d.

The transferable information content calculation curve 51 is preferably in conformity with the network environment and can be built by measuring transferable information contents with the load changed in the actual environment, but the method of building the transferable information content calculation curve 51 is not herein specified.

Furthermore, in extracting the load coefficients from the line load data table 29a, the server load data table 29b and the client load data table 29c, a weighing can be given to each of load coefficients in the tables in a past predetermined time period (for example, 10 minutes) before calculating the average of the load coefficients. Moreover, in calculating the average of the three load coefficients of the line load, the server load and the client load, a weighting can be given to the load coefficient of each table before calculating the average.

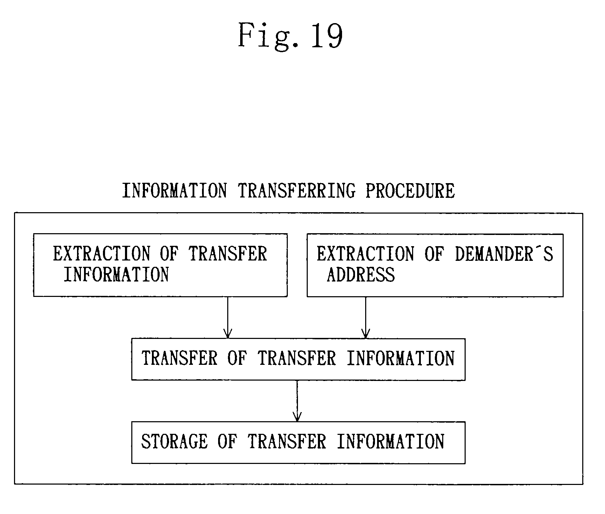

Next, as is shown in a flowchart of an information transferring procedure of Figure 19, the information transferring means 24 of Figure 14 extracts the corresponding transfer information from the transfer information data base 12c of the information storage server 12 in response to the instruction from the load calculating means 31 to start the transfer, and transfers the extracted information to the information retrieval client 11 through the computer network 13.

The information can be transferred by using a generally available file transfer or the like, and the transferring method is not herein specified.

In this manner, according to this embodiment, the loads of the computer network 13, the information storage server 12 and the information retrieval client 11 are constantly measured, and hence, the demanded information can be obtained from the information storage server 12 when the comprehensive load becomes small.

The loads of the computer network 13, the information storage server 12 and the information retrieval client 11 are all measured in this embodiment, but one or two of them alone can be measured.

The installation places of the load measuring means 28, the load data base 29, the information transfer reserving means 30, the load calculating means 31, the transfer reserve data base 12d and the information transferring means 24 are not limited to those described in this embodiment, and they can be installed on any computers accessible through the network.

### (Embodiment 4)

In a fourth embodiment, the system loads of transmitting and receiving computers and the line load of a computer network serving as the transfer line are calculated by using load data constantly measured and stored, so that, with regard to information which has been transferred with a reduced information content when the system loads or the line load was large, previously generated differential information can be transferred to be added to the already transferred information when the load becomes small. Thus, the quality of the transferred information can be improved.

For example, when the load becomes smaller than an average of the loads during the past one month, the differential information, which is generated for addition of the number of pixels and display colors for expressing the information with regard to still image information, the time components with regard to dynamic image information and the high frequency components with regard to speech information, is transferred to be added to the already transferred information.

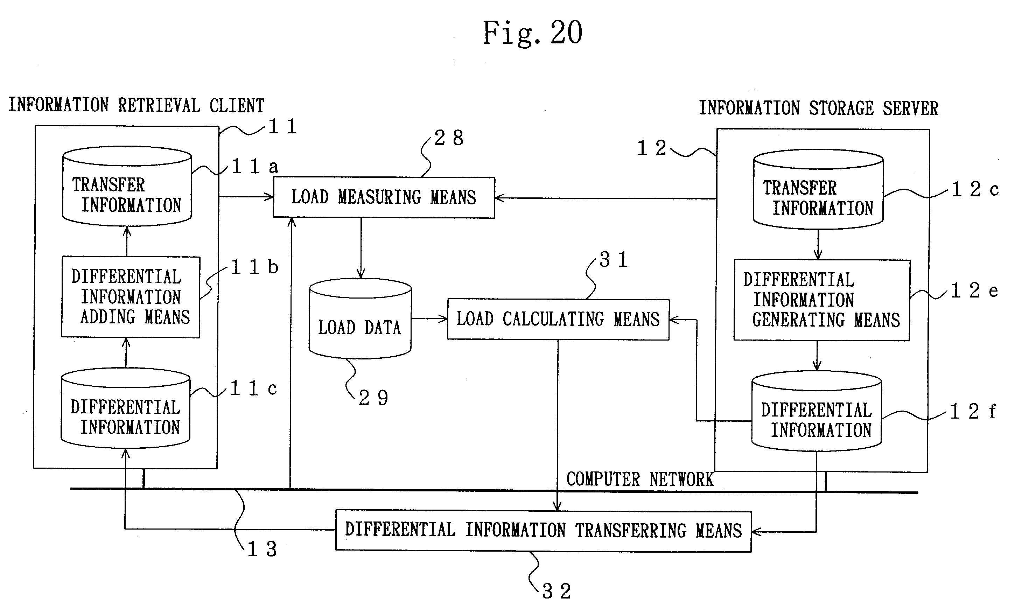

Figure 20 is a diagram for showing the system configuration of an information transfer unit of this embodiment. As is shown in Figure 20, an information retrieval client 11 corresponding to a client computer for demanding information retrieval is connected with an information storage server 12 corresponding to a server computer for storing and providing the information through a computer network 13 serving as a communications medium such as LAN.

This information transfer unit comprises load measuring means 28, differential information generating means 12e, load calculating means 31 and differential information transferring means 32 respectively working as follows: The load measuring means 28 is connected with the computer network 13, the information retrieval client 11 and the information storage server 12, so as to constantly measure the line load of the computer network 13 and the system loads of the information retrieval client 11 and the information storage server 12, and stores the results of the measurement in a load data base 29 as load data. The differential information generating means 12e generates the differential information to be added to the information already transferred to the information retrieval client 11 from the information storage server 12, and stores the differential information in a server side differential information data base 12f. The load calculating means 31 searches the server side differential information data base 12f at a predetermined interval, and when there is a record of the differential information in the server side differential information data base 12f, it extracts the load data at a past time closest to the current time from the load data base 29, so as to calculate a transferable information content in accordance with the load data. In addition, when the differential information extracted from the server side differential information data base 12f has a larger content than the transferable information content, the transfer of the differential information is held, and when the differential information has a smaller content than the transferable information content, the load calculating means 31 instructs the differential information transferring means 32 to start the transfer of the differential information. The differential information transferring means 32 extracts the corresponding differential information from the server side differential information data base 12f of the information storage server 12 in response to the instruction from the load calculating means 31, and transfers the differential information to the information retrieval client 11. Furthermore, the information retrieval client 11 comprises differential information adding means 11b for extracting the transferred differential information from a client side differential information data base 11c and also extracting the previously transferred information from a transfer information data base 11a, so as to add the differential information to the previously transferred information.

Now, an information transfer method by the information transfer unit having the aforementioned system configuration will be described with reference to the accompanying drawings.

First, the load measuring means 28 of Figure 20 constantly measures the line load of the computer network 13 and the system loads of the, information storage server 12 and the information retrieval client 11. This load measuring means 28 is operated in the same manner as the load measuring means 28 of the third embodiment, and the description is omitted.

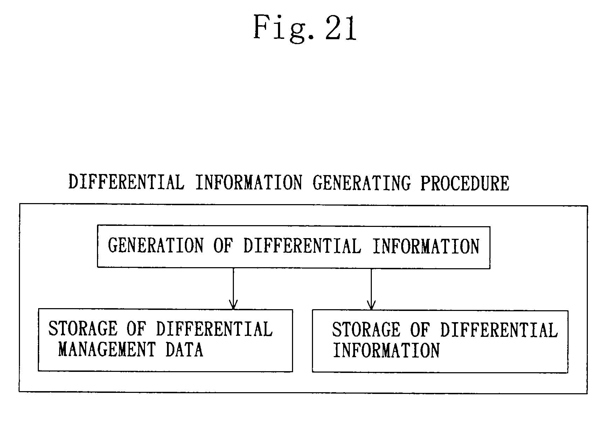

Then, as is shown in a flowchart of a differential information generating procedure of Figure 21, the differential information generating means 12e of Figure 20 generates the differential information for adding an information content to the transfer information already transferred to the information retrieval client 11.

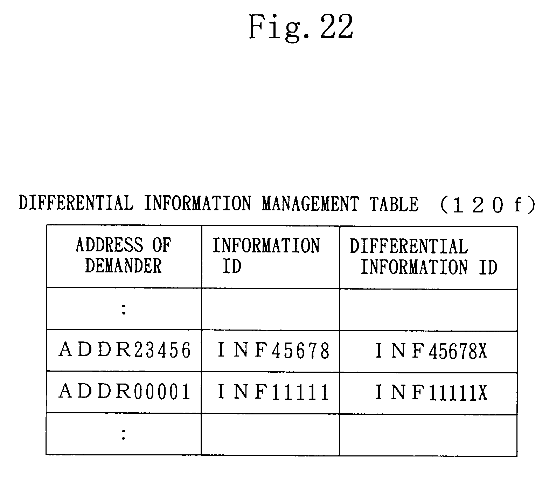

Specifically, when the transfer information is transferred from the information storage server 12 to the information retrieval client 11 with its information content reduced because the line load of the computer network 13 or the system load of the information storage server 11 or the information retrieval client 11 is large, the differential information for increasing the information content of the transfer information is generated to be stored in the server side differential information data base 12f of the information storage server 12. In addition, the differential information generating means 12e registers the address of the demander, i.e., the address of the information retrieval client 11 demanding the information, an information ID for identifying the demanded information, and a differential information ID for identifying the differential information in corresponding items in a differential information management table 120f shown in Figure 22.

The differential information is not herein specified as far as it is generated so as to increase the number of pixels, the high frequency components, the number of display colors, the number of gray scale levels, the time base components, etc. The differential information is generated at the same time as the transfer of the demanded transfer information in this embodiment, but the generation of the differential information is not limited to this timing and the differential information can be generated at any timing.

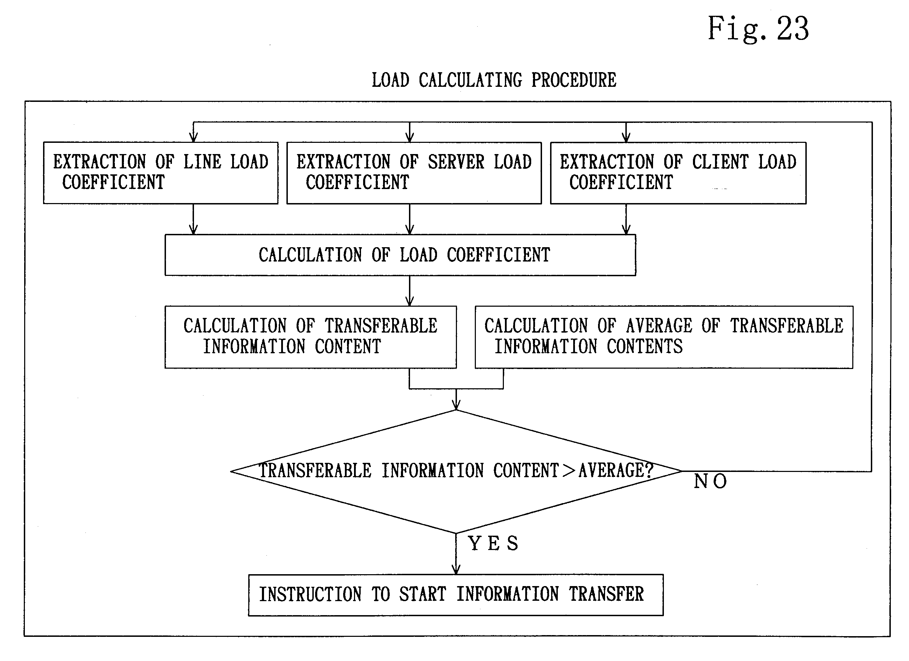

Next, as is shown in a flowchart of a load calculating procedure of Figure 23, the load calculating means 31 of Figure 20 searches, for example, every minute, a line load data table 29a of Figure 3, a server load data table 29b of Figure 11 and a client load data table 29c of Figure 12 for records having a time closest to the current time on the basis of the respective measurement times, so as to extract the respective load coefficients, and calculates a new load coefficient by obtaining an average of the respective load coefficients. By using a transferable information content calculation curve 51 of Figure 6, a transferable information content per second is obtained on the basis of the new load coefficient. Then, when the obtained transferable information content is larger than a specific value (for example, an average value) of a specific past time period (for example, one month), the load calculating means 31 extracts differential management data registered in the differential information management table 120f of Figure 22 in the server side differential information data base 12f, and instructs the differential information transferring means 32 to start the transfer of the differential information to the information retrieval client corresponding to the address of the demander.

The transferable information content calculation curve 51 is preferably in conformity with the network environment and can be built by measuring transferable information contents with the load changed in the actual environment, but the method of building the transferable information content calculation curve 51 is not herein specified.

Also, in extracting the load coefficients from the line load data table 29a of Figure 3, the server load data table 29b of Figure 11 and the client load data table 29c of Figure 12, a weighting can be given to each of the load coefficients in a past predetermined period of time (for example, 10 minutes) in each of the tables 29a, 29b and 29c before calculating the average. Furthermore, in calculating the average of the three load coefficients, a weighting can be given to the load coefficient in each of the tables 29a, 29b and 29c before calculating the average.

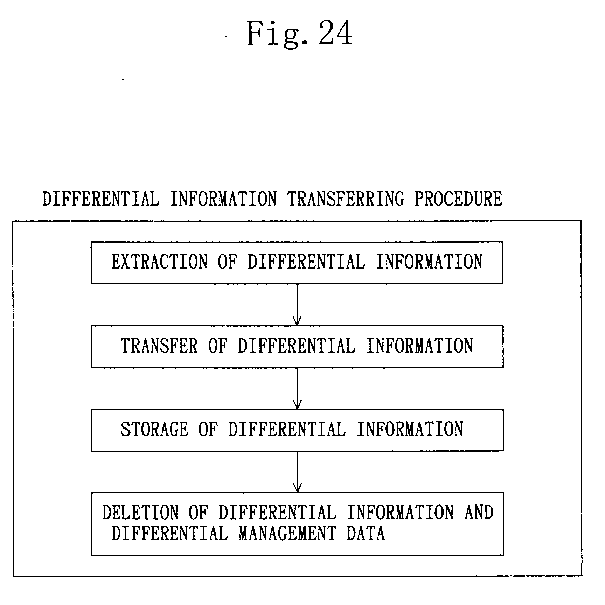

Then, as is shown in a differential information transferring procedure of Figure 24, the differential information transferring means 32 of Figure 20 transfers the differential information from the information storage server 12 to the information retrieval client 11 in response to the instruction from the load calculating means 31.

Specifically, on receiving the instruction to transfer the differential information from the load calculating means 31, the differential information transferring means 32 extracts the corresponding differential information from the server side differential information data base 12f of the information storage server 12, and transfers the extracted differential information to the information retrieval client 11 through the computer network 13.

The differential information can be transferred by using a generally available file transfer or the like, and the method of transferring the differential information is not herein specified.

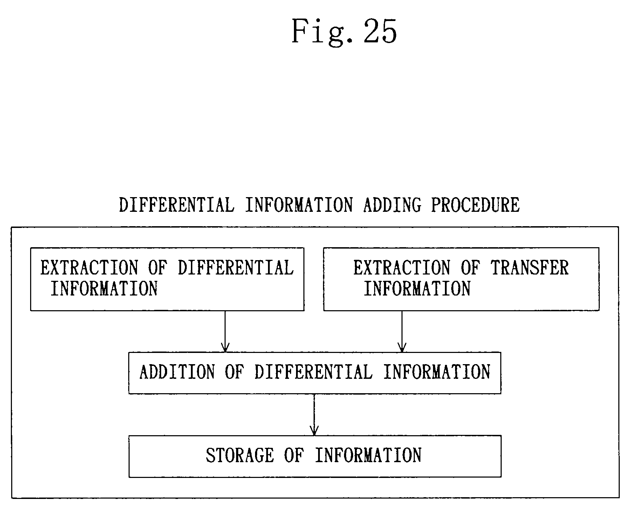

Then, as is shown in a flowchart of a differential information adding procedure of Figure 25, the differential information adding means 11b of Figure 20 extracts the previously transferred information stored in the transfer information data base 11a of the information retrieval client 11 and the differential information stored in the client side differential information data base 11c by using the differential information ID, and adds the differential information to the previously transferred information, so as to generate information with further improved quality.

In this manner, according to this embodiment, when the load of any of the computer network 13, the information storage server 12 and the information retrieval client 11 is small, the differential information is extracted from the information storage server 12, so as to be added to the previously transferred information. Thus, the quality of the provided information can be improved.

In this embodiment, the loads of the computer network 13, the information storage server 12 and the information retrieval client 11 are all measured, but one or two of them alone can be measured.

The installation places of the client side differential data base 11c, the differential information generating means 12e, the server side differential information data base 12f, the load measuring means 28, the load data base 29, the load calculating means 31, and the differential information transferring means 32 are not limited to those described in this embodiment, and they can be installed on any computers accessible through the network.

### (Embodiment 5)

In a fifth embodiment, information having the same content is previously stored in a plurality of server computers. When a client computer demands information transfer of the server computer, the system loads of the plural server computers which can transfer the information and the line load of a computer network serving as a transfer line are calculated by using load data constantly measured and stored, so that the demanded information can be transferred to the client computer by the server computer having the smallest load.

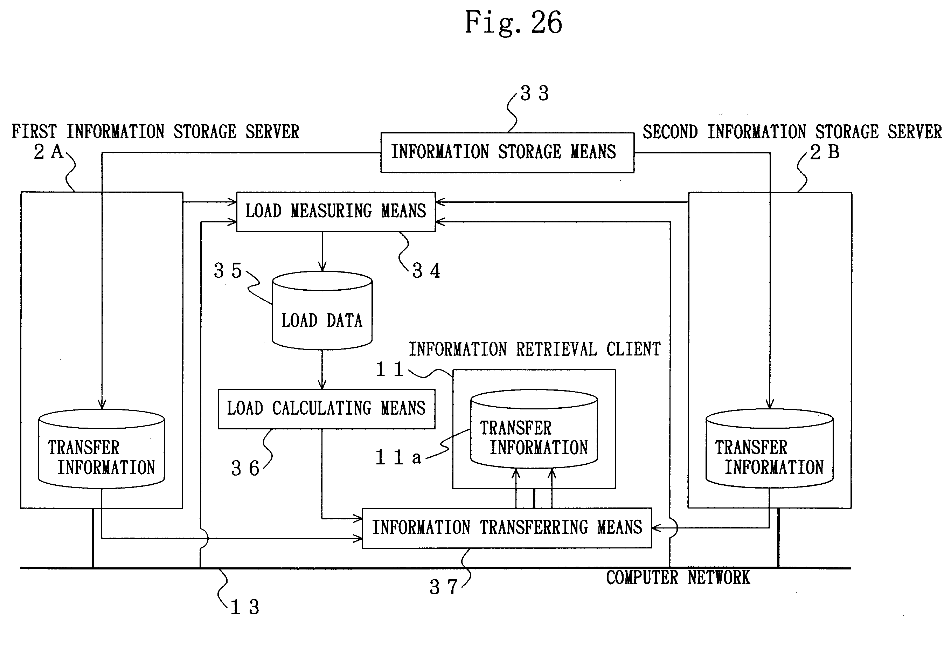

Figure 26 is a diagram for showing the system configuration of an information transfer unit of this embodiment. As is shown in Figure 26, an information retrieval client 11 corresponding to the client computer for demanding the information retrieval is connected with information storage servers 2A and 2B corresponding to a server computer for storing and providing the information through a computer network 13 serving as a communications medium such as LAN.

This information transfer unit comprises information storing means 33, load measuring means 34, load calculating means 36 and information transferring means 37 respectively working as follows: The information storing means 33 stores the same transfer information in the first information storage server 2A and the second information storage server 2B. The load measuring means 34 is connected with the computer network 13, the first information storage server 2A and the second information storage server 2B, so as to constantly measure the line load of the computer network 13 and the system loads of the server computers 2A and 2B, and stores the results of the measurement in a load data base 35 as load data. The load calculating means 36 polls the load data base 35 at a predetermined interval, extracts the load data at a past time closest to the time of the information retrieval demand, and calculates a transferable information content in accordance with the load data. In addition, the load calculating means 36 instructs the information transferring means 37 to start the transfer of the information stored in the server computer having the smallest load and the largest transferable information content. The information transferring means 37 extracts the corresponding transfer information from the data base of either the first information storage server 2A or the second information storage server 2B instructed by the load calculating means 36, and transfers the extracted transfer information to the information retrieval client 11.

Now, an information transfer method by the information transfer unit having the aforementioned system configuration will be described with reference to the accompanying drawings.

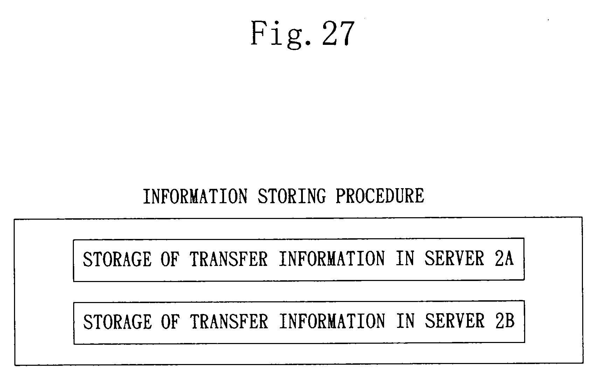

First, as is shown in a flowchart of an information storing procedure of Figure 27, the information storing means 33 of Figure 26 stores the same transfer information in the first information storage server 2A and the second information storage server 2B. The number of the storage servers is not limited to two, but the transfer information can be stored in three or more servers.

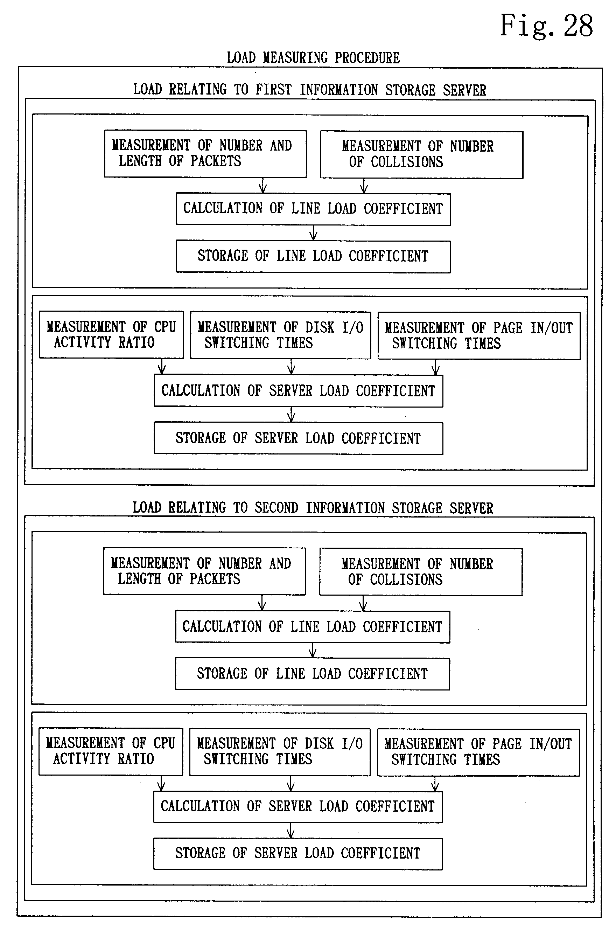

Then, as is shown in a flowchart of a load measuring procedure of Figure 28, the load measuring means 34 of Figure 26 measures and stores the line load of the computer network 13 and the system loads of the first information storage server 2A and the second information storage server 2B.

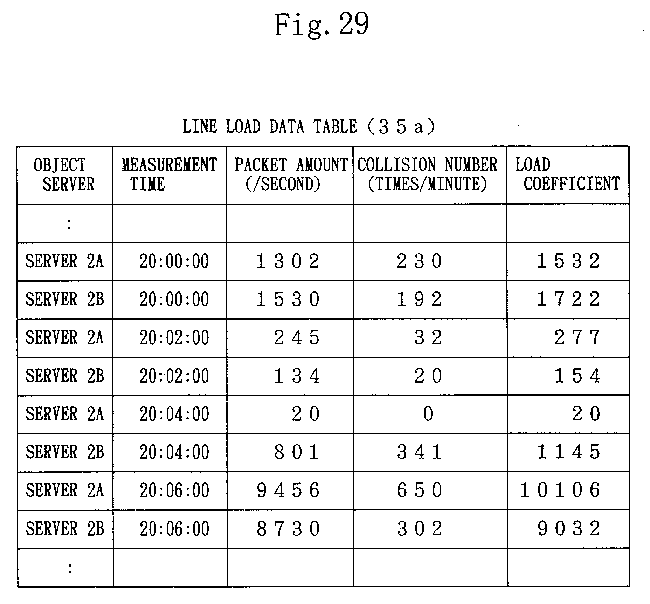

Specifically, the load measuring means 34 measures, for example, every minute, the number and the length of packets flowing through the computer network 13 between the first information storage server 2A and the information retrieval client 11 during a predetermined period of time (for example, one second), so as to calculate a packet amount (by producing the number of packets by the length thereof), and registers the calculated packet amount in a corresponding item in a line load data table 35a of Figure 29 in the load data base 35 together with the object server and the measurement time. Also, the load measuring means 34 measures, for example, every minute, the number of collisions occurring in the network 13 during a predetermined period of time (for example, one minute), and registers the number of collisions in a corresponding item in the line load data table 35a together with the object server and the measurement time. Moreover, the load measuring means 34 calculates a load coefficient on the basis of the packet amount and the number of collisions measured at the same measurement time (by, for example, adding the packet amount to the number of collisions), and registers the calculated load coefficient in an item of the load coefficient at the corresponding time in the line load data table 35a.

Similarly, the load measuring means 34 measures the number and the length of packets flowing through the computer network 13 between the second information storage server 2B and the information retrieval client 11 and the number of collisions, calculates a load coefficient, and registers the load coefficient in the line load data table 35a of Figure 29.

The number and the length of packets and the number of collisions can be measured by a known network monitoring tool or the like, and the method of measuring them is not herein specified. The interval and the time period for measuring the packet amount and the number of collisions are not also specified.

In calculating the load coefficient, a weighting can be given to each element before the addition. Also, a line activity ratio can be measured to be used for calculating the load coefficient.

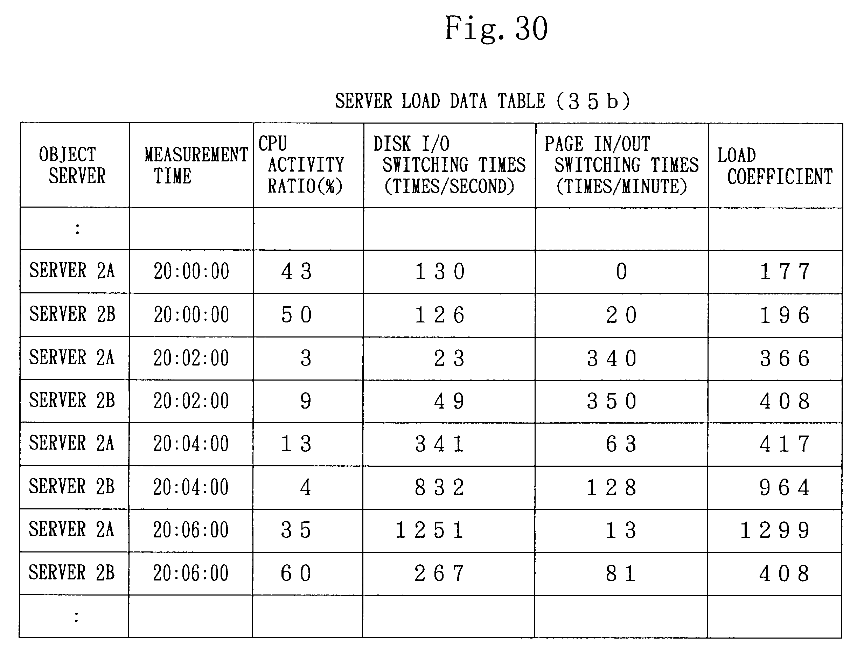

Furthermore, the load calculating means 34 measures, for example, every minute, the system loads of the first information storage server 2A and the second information storage server 2B during a predetermined period of time (for example, one second), and registers a CPU activity ratio, disk I/O switching times and page in/out switching times of each server in corresponding items in a server load data table 35b of Figure 30 in the load data base 35 together with the object server and the measurement time. Then, the load calculating means 34 calculates the load coefficient of each server on the basis of the CPU activity ratio, the disk I/O switching times and the page in/out switching times measured at the same measurement time (for example, by adding the CPU activity ratio, the disk I/O switching times and the page in/out switching times to one another), and registers the calculated load coefficient in an item of the load coefficient at the corresponding measurement time in the server load data table 35b.

The CPU activity ratio, the disk I/O switching times and the page in/out switching times can be measured by a known system monitoring tool or the like, and the method of measuring them is not herein specified. The interval and the time period for measuring the CPU activity ratio, the disk I/O switching times and the page in/out switching times are not also specified.

Furthermore, in calculating the load coefficient, a weighting can be given to each element before the addition. Swap in/out switching times, the number of processes, a hit ratio of a CPU cache, a hit ratio of a disk cache or a data transfer amount of a system bus can be measured to be used for calculating the load coefficient.

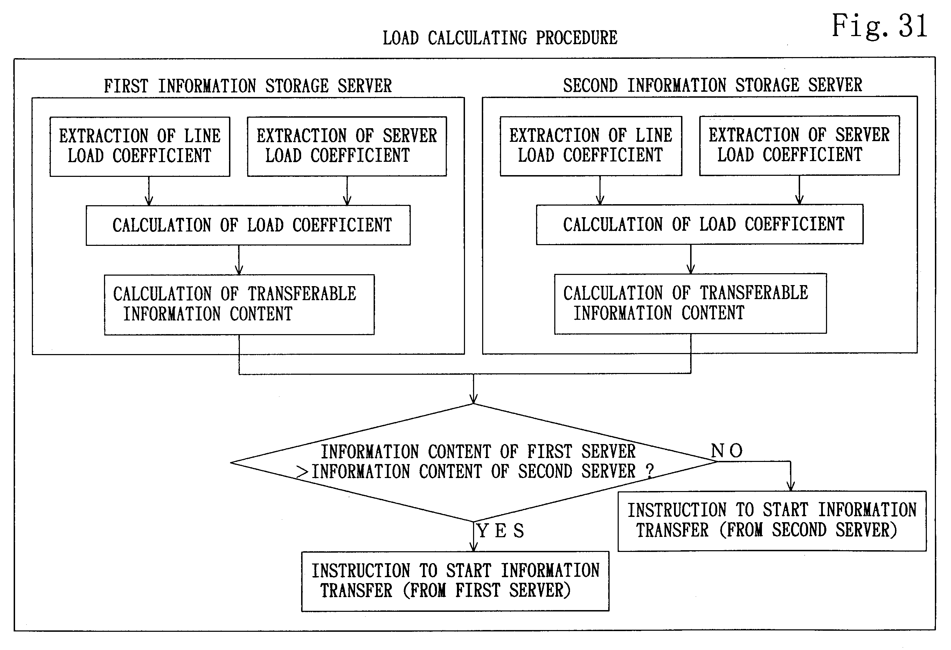

Next, as is shown in a flowchart of a load calculating procedure of Figure 31, the load calculating means 36 of Figure 26 calculates the line load of the computer network 13 and the system loads of the first information storage server 2A and the second information storage server 2B when the information retrieval client 11 demands the information retrieval of the information storage servers 2A and 2B.

Specifically, the load calculating means 36 extracts the time of the demand from an information retrieval demanding format 50 of Figure 5 corresponding to a message for requesting the information retrieval, searches the measurement times in the line load data table 35a of Figure 29 and the server load data table 35b of Figure 30 for records having a past time closest to the time of the information retrieval demand by the information retrieval client 11, extracts the load coefficients, i.e., the line load coefficient and the server load coefficient, and calculates a new load coefficient by obtaining an average of the load coefficients. The load calculating means 36 obtains a transferable information content per second on the basis of the new load coefficient by using a transferable information content calculation curve 51 of Figure 6. This procedure is repeated on each of the servers, so as to obtain the transferable information content per second of each server. Then, the load calculating means 36 compares the transferable information contents per second of the respective servers with each other, so as to determine that the information is to be transferred from the server having the largest transferable information content, and the load calculating means 36 instructs the information transferring means 37 to start the transfer.

The transferable information content calculation curve 51 is preferably in conformity with the network environment and can be built by measuring transferable information contents with the load changed in the actual environment, but the method of building the transferable information content calculation curve 51 is not herein specified.

Furthermore, in extracting the load coefficients from the line load data table 35a of Figure 29 and the server load data table 35b of Figure 30, a weighting can be given to each of the load coefficients in each of the tables 35a and 35b in a past predetermined time period (for example, 10 minutes) before calculating the average. Also, in calculating the average of the two load coefficients, a weighting can be given to the load coefficient of each of the tables 35a and 35b before calculating the average.

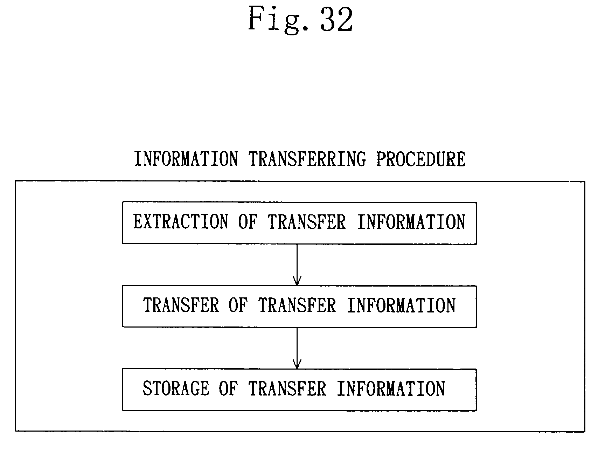

Then, as is shown in a flowchart of an information transferring procedure of Figure 32, the information transferring means 37 of Figure 26 transfers the transfer information through the computer network 13 to the information retrieval client 11 from one of the first and second information storage servers 2A and 2B instructed by the load calculating means 36, and stores the transfer information in a transfer information data base of the information retrieval client 11.

The information can be transferred by a generally available file transfer or the like, and the transfer method is not herein specified.

In this manner, according to this embodiment, the plural information storage servers having the same information are used so as to provide the information from the information storage server having the smallest load in the computer network and in the server itself. Therefore, the information can be provided within substantially a limit time desired by the information retrieval client.

The installation places of the information storing means 33, the load measuring means 34, the load data base 35, the load calculating means 36, and the information transferring means 37 are not limited to those described in this embodiment, and they can be installed on any computers accessible through the network.

## Claims

1. An information transfer unit for transferring information between a plurality of computers mutually connected through a communications medium, comprising:
information transferring means for increasing/decreasing an information content of transfer information in accordance with a size of a load.

2. An information transfer unit, used in a computer network including a server computer for storing and providing information and a client computer for demanding said information mutually connected through a communications medium, comprising:
line load measuring means for measuring a line load of said communications medium;
line load calculating means for calculating a size of said line load;
transfer information generating means for generating transfer information by decreasing, in accordance with said line load, an information content of transfer scheduled information that is scheduled to be transferred when said calculated size of said line load is larger than a predetermined load, and by increasing, in accordance with said line load, an information content of said transfer scheduled information when said calculated size of said line load is smaller than said predetermined load; and
information transferring means for transferring said transfer information generated by said transfer information generating means to said client computer demanding said information.

3. The information transfer unit of Claim 2,
wherein said line load measuring means measures said line load by using at least one of a number of packets flowing through said communications medium, a length of said packets, a number of collisions and a line activity ratio.

4. An information transfer unit, used in a computer network including a server computer for storing and providing information and a client computer for demanding said information mutually connected through a communications medium, comprising:
system load measuring means for measuring a system load of said server computer or said client computer;
system load calculating means for calculating a size of said system load;
transfer information generating means for generating transfer information by decreasing, in accordance with said system load, an information content of transfer scheduled information that is scheduled to be transferred when said calculated size of said system load is larger than a predetermined load, and by increasing, in accordance with said system load, an information content of said transfer scheduled information when said calculated size of said system load is smaller than said predetermined load; and
information transferring means for transferring said transfer information generated by said transfer information generating means to said client computer demanding said information.

5. The information transfer unit of Claim 4,
wherein said system load measuring means measures said system load by using at least one of a CPU activity ratio, disk I/O switching times, page in/out switching times, a number of processes, a hit ratio of a CPU cache, a hit ratio of a disk cache and a data transfer amount of a system bus of said server or client computer.

6. An information transfer unit, used in a computer network including a server computer for storing and providing information and a client computer for demanding said information mutually connected through a communications medium, comprising:
load measuring means for measuring at least one of a line load of said communications medium, a system load of said server computer and a system load of said client computer;
information transfer reserving means for receiving an information transfer demand from said client computer and reserving transfer of said information as transfer reserved information;
load calculating means for calculating a transferable information content on the basis of said load measured by said load measuring means and instructing to start transfer of said transfer reserved information when said transferable information content is larger than an information content of said transfer reserved information; and
information transferring means for transferring said transfer reserved information to said client computer in response to instruction to start the transfer of said transfer reserved information.

7. The information transfer unit of Claim 6,
wherein said load measuring means measures said line load by using at least one of a number of packets flowing through said communications medium, a length of said packets, a number of collisions and a line activity ratio, and measures said system load by using at least one of a CPU activity ratio, disk I/O switching times, page in/out switching times, swap in/out switching times, a number of processes, a hit ratio of a CPU cache, a hit ratio of a disk cache and a data transfer amount of a system bus of said server or client computer.

8. An information transfer unit, used in a computer network including a server computer for storing and providing information and a client computer for demanding said information mutually connected through a communications medium, comprising:
differential information generating means in said server computer for generating differential information for adding an information content to information having been transferred to said client computer;
load measuring means for measuring at least one of a line load of said communications medium, a system load of said server computer and a system load of said client computer;
load calculating means for calculating a transferable information content on the basis of said load measured by said load measuring means, and instructing to start transfer of said differential information when said transferable information content is larger than an information content of said differential information;
differential information transferring means for transferring said differential information to said client computer in response to instruction to start the transfer of said differential information; and
differential information adding means for adding said differential information to said information having been transferred to said client computer.

9. The information transfer unit of Claim 8,
wherein said load measuring means measures said line load by using at least one of a number of packets flowing through said communications medium, a length of said packets, a number of collisions and a line activity ratio, and measures said system load by using at least one of a CPU activity ratio, disk I/O switching times, page in/out switching times, swap in/out switching times, a number of processes, a hit ratio of a CPU cache, a hit ratio of a disk cache and a data transfer amount of a system bus of said server or client computer.

10. An information transfer unit, used in a computer network including a server computer for storing and providing information and a client computer for demanding said information mutually connected through a communications medium, comprising:
information storing means for storing information having the same content in plural server computers;
load measuring means for measuring a line load between said client computer demanding said information and each of said plural server computers or at least a system load of each of said plural server computers;
load calculating means for instructing one of said server computers having the smallest load to start transfer of said information; and
information transferring means for transferring said information to said client computer in response to instruction to start the transfer of said information.

11. The information transfer unit of Claim 10,
wherein said load measuring means measures said line load by using at least one of a number of packets flowing through said communications medium, a length of said packets, a number of collisions and a line activity ratio, and measures said system load by using at least one of a CPU activity ratio, disk I/O switching times, page in/out switching times, swap in/out switching times, a number of processes, a hit ratio of a CPU cache, a hit ratio of a disk cache and a data transfer amount of a system bus of each of said server computers.

12. A method of transferring information between plural computers mutually connected through a communications medium, comprising:
an information transferring step of increasing/decreasing an information content of transfer information in accordance with a size of a load.

13. An information transfer method, used in a computer network including a server computer for storing and providing information and a client computer for demanding said information mutually connected through a communications medium, comprising:
a line load measuring step of measuring a line load of said communications medium;
a line load calculating step of calculating a size of said line load;
a transfer information generating step of generating transfer information by decreasing, in accordance with said line load, an information content of transfer scheduled information that is scheduled to be transferred when said calculated size of said line load is larger than a predetermined load, and by increasing, in accordance with said line load, an information content of said transfer scheduled information when said calculated size of said line load is smaller than said predetermined load; and
an information transferring step of transferring said transfer information generated in said transfer information generating step to said client computer demanding said information.

14. The information transfer method of Claim 13,
wherein said line load measuring step includes a step of measuring said line load by using at least one of a number of packets flowing through said communications medium, a length of said packets, a number of collisions and a line activity ratio.

15. An information transfer method, used in a computer network including a server computer for storing and providing information and a client computer for demanding said information mutually connected through a communications medium, comprising:
a system load measuring step of measuring a system load of said server computer or said client computer;
a system load calculating step of calculating a size of said system load;
a transfer information generating step of generating transfer information by decreasing, in accordance with said system load, an information content of transfer scheduled information that is scheduled to be transferred when said calculated size of said system load is larger than a predetermined load, and by increasing, in accordance with said system load, an information content of said transfer scheduled information when said calculated size of said system load is smaller than said predetermined load; and
an information transferring step of transferring said transfer information generated in said transfer information generating step to said client computer demanding said information.

16. The information transfer method of Claim 15,
wherein said system load measuring step includes a step of measuring said system load by using at least one of a CPU activity ratio, disk I/O switching times, page in/out switching times, a number of processes, a hit ratio of a CPU cache, a hit ratio of a disk cache and a data transfer amount of a system bus of said server or client computer.

17. An information transfer method, used in a computer network including a server computer for storing and providing information and a client computer for demanding said information mutually connected through a communications medium, comprising:
a load measuring step of measuring at least one of a line load of said communications medium, a system load of said server computer and a system load of said client computer;
an information transfer reserving step of receiving an information transfer demand from said client computer and reserving transfer of said information as transfer reserved information;
a load calculating step of calculating a transferable information content on the basis of said load measured in said load measuring step and instructing to start transfer of said transfer reserved information when said transferable information content is larger than an information content of said transfer reserved information; and
an information transferring step of transferring said transfer reserved information to said client computer in response to instruction to start the transfer of said transfer reserved information.

18. The information transfer method of Claim 17,
wherein said load measuring step includes a step of measuring said line load by using at least one of a number of packets flowing through said communications medium, a length of said packets, a number of collisions and a line activity ratio, and measuring said system load by using at least one of a CPU activity ratio, disk I/O switching times, page in/out switching times, swap in/out switching times, a number of processes, a hit ratio of a CPU cache, a hit ratio of a disk cache and a data transfer amount of a system bus of said server or client computer.

19. An information transfer method, used in a computer network including a server computer for storing and providing information and a client computer for demanding said information mutually connected through a communications medium, comprising:
a differential information generating step in said server computer of generating differential information for adding an information content to information having been transferred to said client computer;
a load measuring step of measuring at least one of a line load of said communications medium, a system load of said server computer and a system load of said client computer;
a load calculating step of calculating a transferable information content on the basis of said load measured in said load measuring step, and instructing to start transfer of said differential information when said transferable information content is larger than an information content of said differential information;
a differential information transferring step of transferring said differential information to said client computer in response to instruction to start the transfer of said differential information; and
a differential information adding step of adding said differential information to said information having been transferred to said client computer.

20. The information transfer method of Claim 19,
wherein said load measuring step includes a step of measuring said line load by using at least one of a number of packets flowing through said communications medium, a length of said packets, a number of collisions and a line activity ratio, and measuring said system load by using at least one of a CPU activity ratio, disk I/O switching times, page in/out switching times, swap in/out switching times, a number of processes, a hit ratio of a CPU cache, a hit ratio of a disk cache and a data transfer amount of a system bus of said server or client computer.

21. An information transfer method, used in a computer network including a server computer for storing and providing information and a client computer for demanding said information mutually connected through a communications medium, comprising:
an information storing step of storing information having the same content in plural server computers;
a load measuring step of measuring a line load between said client computer demanding said information and each of said plural server computers or at least a system load of each of said plural server computers;
a load calculating step of instructing one of said server computers having the smallest load to start transfer of said information; and
an information transferring step of transferring said information to said client computer in response to instruction to start the transfer of said information.

22. The information transfer method of Claim 21,
wherein said load measuring step includes a step of measuring said line load by using at least one of a number of packets flowing through said communications medium, a length of said packets, a number of collisions and a line activity ratio, and measuring said system load by using at least one of a CPU activity ratio, disk I/O switching times, page in/out switching times, swap in/out switching times, a number of processes, a hit ratio of a CPU cache, a hit ratio of a disk cache and a data transfer amount of a system bus of each of said server computers.
